# EUROPEAN PATENT APPLICATION

(11) **EP 4 645 840 A1**
(43) Date of publication of application: **05.11.2025**
(21) Application number: 24884137.1
(22) Date of filing: 15.08.2024
(51) Int. Cl.: H04M 1/72403

(54) **INTERFACE DISPLAY METHOD AND RELATED APPARATUS**

(30) Priority: 30.10.2023 CN 202311412250
(71) Applicant: Honor Device Co., Ltd., Shenzhen, Guangdong 518040 (CN)
(72) Inventor: ZHOU, Ruijie, Shenzhen, Guangdong 518040 (CN)
(74) Representative: MERH-IP Matias Erny Reichl Hoffmann Patentanwälte PartG mbB
(86) International application number: PCT/CN2024/112540
(87) International publication number: WO 2025/092130

(57) **Abstract**

An interface display method and a related apparatus are provided in embodiments of this application, and relate to the field of terminal technologies. The method includes: When a user modifies a position of a vowifi switch displayed in a control center interface, an electronic device can save a modification operation of the user. When a SIM card is inserted into the electronic device again, the saved position, of the vowifi switch, previously modified by the user may be obtained, so that the position at which the vowifi switch is displayed is the position modified by the user. In this way, modification of the user on the position of the vowifi switch may take effect, thereby improving user experience.

## Description

This application claims priority to Chinese Patent Application No. 202311412250.1, filed with the China National Intellectual Property Administration on October 30, 2023 and entitled "INTERFACE DISPLAY METHOD AND RELATED APPARATUS", which is incorporated herein by reference in its entirety.

### TECHNICAL FIELD

This application relates to the field of terminal technologies, and in particular, to an interface display method and a related apparatus.

### BACKGROUND

An electronic device may provide a Wi-Fi calling (voice over WiFi, vowifi) function. A mobile phone is used as an example. When a subscriber identity module (subscriber identification module, SIM) card supporting a vowifi function is inserted into the mobile phone, the mobile phone may display an icon of a vowifi shortcut switch in a control center interface. In addition, a user may also modify a position at which the vowifi shortcut switch is displayed in the control center interface.

However, in some scenarios, an operation of modifying the vowifi shortcut switch does not take effect. This reduces user experience.

### SUMMARY

The embodiments of this application provide an interface display method and a related apparatus, so that when a user modifies a position of a vowifi switch displayed in a control center interface, an electronic device can save a modification operation of the user. When a SIM card is inserted into the electronic device again, the saved position, of the vowifi switch, previously modified by the user may be obtained, so that the position at which the vowifi switch is displayed is the position modified by the user. In this way, modification of the user on the position of the vowifi switch may take effect, thereby improving user experience.

According to a first aspect, an embodiment of this application provides an interface display method. The method includes:
A first switch is displayed in a first interface of an electronic device when a first subscriber identity module SIM card is inserted into the electronic device, where the first switch is located at a first position in a first switch display area of the first interface; in response to an operation of modifying the first switch to a second position in the first switch display area, the electronic device displays the first switch at the second position in the first switch display area, where the first position and the second position are different; after the first SIM card is removed from the electronic device, the first switch is not displayed in the first switch display area; and after the first SIM card is inserted into the electronic device again, the electronic device displays the first switch at the second position in the first switch display area. In this way, a position at which the vowifi switch is displayed may be a position modified by the user.

In a possible implementation, after in response to the operation of modifying the first switch to the second position in the first switch display area, the method further includes: The first switch is saved at the second position in the first switch display area; and after the first SIM card is removed from the electronic device, the electronic device further saves the second position of the first switch in the first switch display area; and that the electronic device displays the first switch at the second position in the first switch display area includes: the electronic device displays the first switch at the second position in the first switch display area based on the second position saved in the electronic device. In this way, the electronic device may obtain the second position, of the first switch, that is modified by the user, so that the first switch in the first switch display area can be displayed based on modification of the user, thereby improving user experience.

In a possible implementation, the displaying the first switch at the second position in the first switch display area includes: When there is no empty position between the second position and a position of a last switch in the first switch display area, the electronic device inserts the first switch into the second position in the first switch display area. In this way, the electronic device inserts the first switch into the second position in the first switch display area, so that the first switch in the first switch display area can be displayed based on modification of the user.

In a possible implementation, the method further includes: In response to an operation of modifying the first switch to a third position in the first switch display area, the electronic device displays the first switch at the third position in the first switch display area, where the third position and the second position are different; after the first SIM card is removed from the electronic device, the first switch is not displayed in the first switch display area; and after the first SIM card is inserted into the electronic device again, the electronic device displays the first switch at a fourth position in the first switch display area, where the fourth position is different from the third position, the fourth position is a position of a last switch in switches displayed in the first switch display area, and there is no empty position between the switches displayed in the first switch display area. In this way, there is no empty position between shortcut switches displayed in the first switch display area, so that interface aesthetics is improved, thereby improving user experience.

In a possible implementation, after in response to the operation of modifying the first switch to the third position in the first switch display area, the method further includes: The first switch is saved at the third position in the first switch display area; and after the first SIM card is removed from the electronic device, the electronic device further saves the third position of the first switch in the first switch display area; and that the electronic device displays the first switch at a fourth position in the first switch display area includes: when there is an empty position between the third position and the position of the last switch in the switches displayed in the first switch display area, the electronic device displays the first switch at the fourth position in the first switch display area. In this way, the electronic device can implement display effect after the user modifies the position of the first switch, and interface aesthetics can also be improved, thereby improving user experience.

In a possible implementation, the first interface includes a first button, and the method further includes: In response to an operation of triggering the first button, the electronic device enters a second interface from the first interface, where the second interface includes a second switch display area, a third switch display area, and a second button, and the first switch is displayed in the second switch display area; in response to an operation of modifying the first switch to the third switch display area, the electronic device displays the first switch in the third switch display area; in response to an operation of triggering the second button, the electronic device enters the first interface from the second interface, where the first switch is not displayed in the first switch display area of the first interface; after the first SIM card is removed from the electronic device, the first switch is not displayed in the first switch display area, and the first switch is not displayed in the third switch display area; and after the first SIM card is inserted into the electronic device again, the first switch is not displayed in the first switch display area, and the electronic device displays the first switch in the third switch display area of the second interface. In this way, a position identifier of the first position is used, so that it can be determined that the first switch does not need to be displayed in a control center interface, and a modification operation of the user can be quickly determined, reducing an execution procedure of continuing to add the first switch in the control center interface.

In a possible implementation, the position identifier of the first switch is maintained in the electronic device; and when the first switch is located in the third switch display area, the position identifier of the first switch is recorded as a first identifier; after in response to the operation of triggering the second button, the method further includes: the position identifier of the first switch is saved as the first identifier; and that the first switch is not displayed in the first switch display area includes: the electronic device skips displaying the first switch in the first switch display area based on the first identifier. In this way, a scenario in which the first switch is displayed at different positions can be quickly identified, a procedure of adding the first switch in the first switch display area is simplified, and the first switch is accurately displayed at the position based on the modification operation of the user.

In a possible implementation, a position identifier of the first switch is maintained in the electronic device; and when the first SIM card is not inserted into the electronic device or the first switch is not displayed in the electronic device, the position identifier of the first switch is recorded as a second identifier, an identifier of a default position of the first switch is preset in the electronic device, and the position identifier of the first switch is the second identifier before in response to the operation of modifying the first switch to the second position in the first switch display area; and that a first switch is displayed in a first interface of an electronic device when a first subscriber identity module SIM card is inserted into the electronic device includes: when the first subscriber identity module SIM card is inserted into the electronic device, the electronic device displays the first switch in the first interface based on the identifier of the default position. In this way, the position of the first switch can be preset in a default list, so that the first switch is displayed at a fixed position in the first interface, thereby facilitating the user to find the first switch.

In a possible implementation, that the electronic device displays the first switch in the first interface based on the identifier of the default position includes: When there is no empty position between the default position and a position of a last switch in switches displayed in the first switch display area, the electronic device inserts the first switch into the default position in the first switch display area; or when there is an empty position between the default position and a position of a last switch in switches displayed in the first switch display area, the electronic device inserts the first switch into a next position of the position of the last switch in the first switch display area. In this way, the electronic device presets the position of the first switch in the default list, so that the user can easily find the position of the first switch in the first interface, thereby improving user experience.

In a possible implementation, the electronic device maintains the position identifier of the first switch in a database, the position identifier of the first switch in the database is updated when a position of a switch in the first switch display area is changed, and the database is different from a database configured to save an identifier of the switch and the position of the switch in the first switch display area. In this way, when the SIM card is inserted into the electronic device next time, the modification operation of the user can be obtained from the database, and the first switch can be displayed based on modification of the user.

In a possible implementation, before in response to the operation of modifying the first switch to the second position in the first switch display area, a second SIM card is further inserted into the electronic device, the electronic device further displays a second switch in the first switch display area, the second switch is located at a fifth position in the first switch display area, and the fifth position and the first position are different; and after in response to the operation of modifying the first switch to the second position in the first switch display area, the method further includes: the second switch is saved at the fifth position in the first switch display area; after the second SIM card is removed from the electronic device, the electronic device further saves the fifth position of the second switch in the first switch display area; and after the second SIM card is inserted into the electronic device again, the electronic device displays the second switch in the first switch display area based on the fifth position. In this way, the electronic device can save a position of each SIM card displayed in the first switch display area, and can accurately display a position of each switch in the first switch display area after the user modifies a specific switch.

In a possible implementation, in the first switch display area, a position of the first switch is located before a position of the second switch, and before that the electronic device displays the first switch at the second position in the first switch display area, the method further includes: The second switch is moved forward one position in the first switch display area; and that the electronic device displays the second switch in the first switch display area includes: the electronic device displays the second switch after the position is moved in the first switch display area. In this way, the second switch is moved forward one position in the first switch display area, so that the second switch can be displayed at a correct position in the control center interface, thereby matching the modified position of the user.

In a possible implementation, the fifth position of the second switch and the second position of the first switch are saved in different databases. In this way, a position of each switch can be easily maintained, thereby reducing a possibility of confusion between positions of two switches, and improving code robustness.

In a possible implementation, after the first subscriber identity module SIM card is inserted into the electronic device, the method further includes: When a broadcast used to indicate a state change of the first SIM card is obtained, a configuration item of the first SIM card and a state of the first SIM card are determined; and when the configuration item of the first SIM card is a first preset value and the state of the first SIM card is a first preset state, whether the first SIM card supports a preset function is determined, where the configuration item being the first preset value is used to indicate that a shortcut switch of the first SIM card is displayed in the first switch display area, and the state of the first SIM card being the first preset state is used to indicate that the first SIM card is in position; and that a first switch is displayed in a first interface of an electronic device includes: when the first SIM card supports the preset function, the first switch is displayed in the first interface of the electronic device. In this way, it may be determined that the first SIM card is in position and can be normally used, and the preset function provided by the first SIM card may be displayed in the control center interface, thereby reducing a probability of occurring a display error when the switch is displayed in the control center interface.

In a possible implementation, the preset function includes: a wireless fidelity Wi-Fi calling vowifi function of the first SIM card. In this way, the vowifi function is displayed in the control center interface, so that the user can easily enable or disable the vowifi function, to improve user experience.

In a possible implementation, after the first SIM card is removed from the electronic device, the method further includes: When a broadcast used to indicate a state change of the first SIM card is obtained, a state of the first SIM card is determined; and that the first switch is not displayed in the first switch display area includes: when the state of the first SIM card is a second preset state, the first switch is not displayed in the first switch display area, where the state of the first SIM card being the second preset state is used to indicate that the first SIM card is not in position. In this way, after the first SIM card is removed from the electronic device, logic of removing the first switch is executed, and the display position of the switch in the control center interface may be updated in time, thereby providing, for the user, a shortcut function that can be normally used.

In a possible implementation, the first interface includes a first button, and the method further includes: In response to an operation of triggering the first button, the electronic device enters a second interface from the first interface, where the second interface includes a second switch display area, a third switch display area, and a second button, and a first icon of a first application is displayed in the third switch display area; in response to an operation of modifying the first icon to a sixth position in the second switch display area, the electronic device displays the first icon at the sixth position in the second switch display area; in response to an operation of triggering the second button, the electronic device enters the first interface from the second interface, where the first icon is displayed at the sixth position in the first switch display area of the first interface; after the first application is uninstalled in the electronic device, the first icon is not displayed in the first switch display area; and after the first application is installed in the electronic device again, the electronic device displays the first icon at a seventh position in the first switch display area, where the seventh position and the sixth position are the same or different. In this way, the user can not only move a position of the shortcut switch displayed with a card, but also move a shortcut icon of the application. This increases flexibility of displaying the switch in the control center, so that user experience can be improved.

In a possible implementation, that the electronic device displays the first icon at a seventh position in the first switch display area includes: When there is no empty position between the sixth position and a position of a last switch in switches displayed in the first switch display area, the electronic device inserts the first icon into the seventh position in the first switch display area, where the seventh position and the sixth position are the same; or when there is an empty position between the sixth position and a position of a last switch in switches displayed in the first switch display area, the electronic device inserts the first switch into the seventh position in the first switch display area, where the seventh position is a next position of the position of the last switch, and the seventh position and the sixth position are different. In this way, that the position of the first icon is modified by the user can be met, and interface aesthetics can also be improved, thereby improving user experience.

In a possible implementation, after in response to the operation of triggering the second button, the method further includes: The sixth position of the first icon is saved in the first switch display area; and after the first application is uninstalled in the electronic device, the electronic device further saves the sixth position of the first icon in the first switch display area; and that the electronic device displays the first icon at a seventh position in the first switch display area includes: the electronic device displays the first switch at the seventh position in the first switch display area based on the sixth position saved in the electronic device. In this way, the electronic device may obtain the sixth position, of the first icon, that is modified by the user, so that the first icon in the first switch display area can be displayed based on modification of the user, thereby improving user experience.

According to a second aspect, an embodiment of this application provides an interface display apparatus. The apparatus may be an electronic device, or may be a chip or a chip system in the electronic device. The apparatus may include a display unit and a processing unit. The display unit is configured to implement any display-related method performed by the electronic device according to any one of the first aspect or the possible implementations of the first aspect. The processing unit is configured to implement any processing-related method performed by the electronic device according to any one of the first aspect or the possible implementations of the first aspect. When the apparatus is the electronic device, the processing unit may be a processor. The apparatus may further include a storage unit, and the storage unit may be a memory. The storage unit is configured to store instructions, and the processing unit executes the instructions stored in the storage unit, so that the electronic device is enabled to implement the method described according to any one of the first aspect or the possible implementations of the first aspect. When the apparatus is the chip or the chip system in the electronic device, the processing unit may be a processor. The processing unit executes the instructions stored in the storage unit, so that the electronic device is enabled to implement the method described according to any one of the first aspect or the possible implementations of the first aspect. The storage unit may be a storage unit (for example, a register or a cache) in the chip, or may be a storage unit (for example, a read-only memory or a random access memory), in the electronic device, located outside the chip.

According to a third aspect, an embodiment of this application provides a terminal device. The terminal device includes a processor and a memory, the memory is configured to store code instructions, and the processor is configured to run the code instructions, to perform the method described according to any one of the first aspect or the possible implementations of the first aspect.

According to a fourth aspect, an embodiment of this application provides a computer-readable storage medium. The computer-readable storage medium stores a computer program or instructions. When the computer program or the instructions is/are run on a computer, the computer is enabled to perform the method described according to any one of the first aspect or the possible implementations of the first aspect.

According to a fifth aspect, an embodiment of this application provides a computer program product including a computer program. When the computer program is run on a computer, the computer is enabled to perform the method described according to any one of the first aspect or the possible implementations of the first aspect.

According to a sixth aspect, this application provides a chip or a chip system. The chip or the chip system includes at least one processor and a communication interface. The communication interface and the at least one processor are interconnected through a line. The at least one processor is configured to run a computer program or instructions, to perform the method described according to any one of the first aspect or the possible implementations of the first aspect. The communication interface in the chip may be an input/output interface, a pin, a circuit, or the like.

In a possible implementation, the chip or the chip system described in this application further includes at least one memory, and the at least one memory stores instructions. The memory may be a storage unit, for example, a register or a cache, inside the chip, or may be a storage unit (for example, a read-only memory or a random access memory) of the chip.

It should be understood that technical solutions of the second aspect to the sixth aspect of this application correspond to those of the first aspect of this application, and beneficial effect achieved in the aspects and corresponding feasible implementations are similar. Details are not described again.

### BRIEF DESCRIPTION OF THE DRAWINGS

FIG. 1 is a schematic diagram of a structure of an electronic device according to an embodiment of this application;
FIG. 2 is a schematic diagram of a software structure of an electronic device according to an embodiment of this application;
FIG. 3 is a schematic diagram of displaying a vowifi switch in a control center interface according to an embodiment of this application;
FIG. 4 is a schematic diagram of a pop-up box of a control center interface according to an embodiment of this application;
FIG. 5 is a schematic diagram of a Wi-Fi calling interface according to an embodiment of this application;
FIG. 6 is a schematic diagram of an edit shortcut switch interface according to an embodiment of this application;
FIG. 7 is a schematic diagram of an adding procedure of a vowifi switch according to an embodiment of this application;
FIG. 8 is a schematic diagram of a removing procedure of a vowifi switch according to an embodiment of this application;
FIG. 9 is a schematic diagram of a saving procedure of a vowifi switch according to an embodiment of this application;
FIG. 10 is a schematic diagram of a saving procedure of a vowifi switch for newly saving a modification operation of a user according to an embodiment of this application;
FIG. 11 is a schematic diagram of an adding procedure of a vowifi switch after a new procedure according to an embodiment of this application;
FIG. 12 is a schematic diagram of a new procedure in an adding procedure of a vowifi switch according to an embodiment of this application;
FIG. 13 is a schematic diagram of an interface display method according to an embodiment of this application; and
FIG. 14 is a schematic diagram of a structure of a chip according to an embodiment of this application.

### DESCRIPTION OF EMBODIMENTS

To facilitate clear descriptions of technical solutions of the embodiments of this application, the following briefly introduces some terms and technologies involved in the embodiments of this application.

### 1. Terms

In the embodiments of this application, terms such as "first" and "second" are used to distinguish between same items or similar items that provide basically same functions or purposes. For example, a first chip and a second chip are merely used to distinguish between different chips, and are not intended to limit a sequence of the first chip and the second chip. A person skilled in the art may understand that the terms such as "first" and "second" do not limit a quantity or an execution sequence, and the terms such as "first" and "second" do not indicate a definite difference.

It should be noted that in the embodiments of this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In the embodiments of this application, "at least one" means one or more, and "a plurality of' means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

### 2. Electronic device

The electronic device in the embodiments of this application may alternatively be any form of terminal device. For example, the electronic device may include: a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, an electronic device in a 5G network, an electronic device in a future evolved public land mobile network (public land mobile network, PLMN), or the like. This is not limited in the embodiments of this application.

By way of an example and not a limitation, in the embodiments of this application, the electronic device may alternatively be a wearable device. The wearable device may also be referred to as a wearable smart device, and is a general term for wearable devices that are intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not merely a hardware device, but also implements powerful functions through software support, data exchange, and cloud interaction. In a broad sense, wearable intelligent devices include full-featured and large-sized devices that can implement complete or partial functions without depending on smartphones, for example, smart watches or smart glasses, and devices that focus on only one type of application function and need to operate with other devices such as smartphones, for example, various smart bands or smart jewelry for monitoring physical signs.

In addition, in the embodiments of this application, the electronic device may alternatively be an electronic device in an internet of things (internet of things, IoT) system. IoT is an important component in development of future information technologies. A main technical feature of the IoT is to connect an object to a network by using a communication technology, to implement an intelligent network of human-machine interconnection and thing-thing interconnection.

In the embodiments of this application, the electronic device may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

In the embodiments of this application, the electronic device or each network device includes a hardware layer, an operating system layer that runs above the hardware layer, and an application layer that runs above the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a windows operating system. The application layer includes applications such as a browser, an address book, word processing software, and instant messaging software.

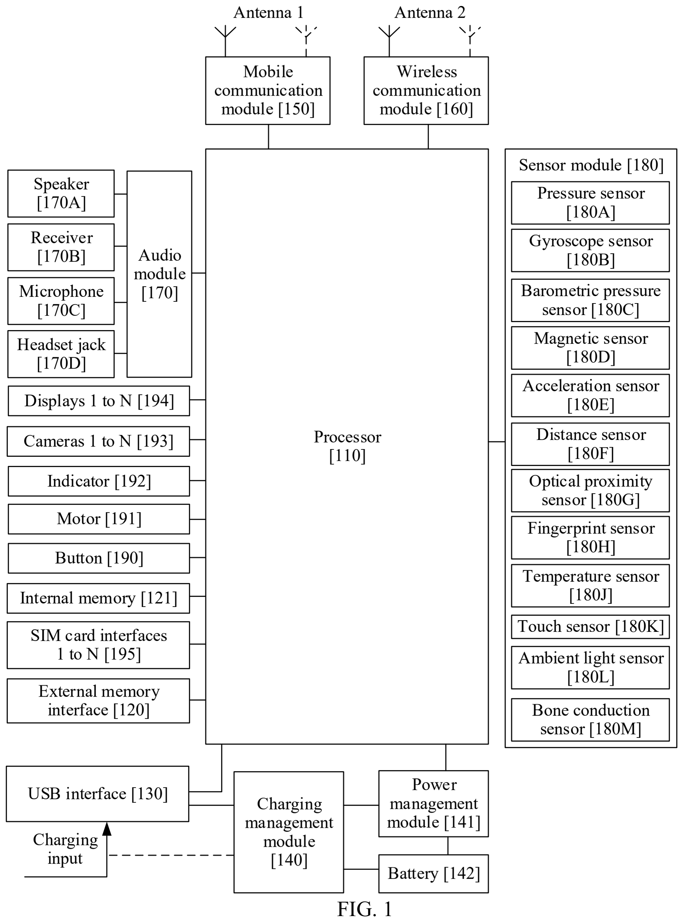

For example, FIG. 1 is a schematic diagram of a structure of an electronic device.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a SIM card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in the embodiments of the present invention does not constitute a specific limitation on the electronic device. In some other embodiments of this application, the electronic device may include more or fewer components than those shown in the figure, or some components may be combined, or some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may save instructions or data that have/has been recently used or cyclically used by the processor 110. If the processor 110 needs to use the instructions or the data again, the processor 110 may directly invoke the instructions or the data from the foregoing memory. This avoids repeated access, reduces a waiting time of the processor 110, and improves system efficiency.

In some embodiments, the processor 110 may include one or more interfaces. The interface may include a SIM card interface and the like. It may be understood that an interface connection relationship between the modules illustrated in the embodiments of the present invention is merely an example for description, and does not constitute a limitation on the structure of the electronic device. In some other embodiments of this application, the electronic device may alternatively use an interface connection manner different from that in the foregoing embodiment, or a combination of a plurality of interface connection manners.

The internal memory 121 may be configured to store computer-executable program code, and the executable program code includes instructions. The internal memory 121 may include a program storage area and a data storage area. The program storage area may store an operating system, an application required by at least one function, and the like. The data storage area may store data created in a process of using the electronic device. In addition, the internal memory 121 may include a high-speed random access memory, and may further include a nonvolatile memory, for example, at least one magnetic disk storage device, a flash memory device, or a universal flash storage (universal flash storage, UFS). The processor 110 performs various function applications and data processing of the electronic device by running instructions saved in the internal memory 121 and/or instructions saved in the memory disposed in the processor.

The display 194 is configured to display an image, a video, and the like. The display 194 includes a display panel. In some embodiments, the electronic device may include one or N displays 194, where N is a positive integer greater than 1. The electronic device implements a display function through the GPU, the display 194, the application processor, and the like. For example, in the embodiments of this application, the display 194 may be used to display a control center interface, an edit shortcut switch interface, a wireless fidelity (wireless fidelity, Wi-Fi) technology call interface, and the like.

The SIM card interface 195 is configured to be connected to a SIM card. The SIM card may be inserted into the SIM card interface 195 or removed from the SIM card interface 195, to be in contact with or be separated from the electronic device. The electronic device may include one or N SIM card interfaces 195, where N is a positive integer greater than 1. For example, in the embodiments of this application, the SIM card interface 195 may be configured to be connected to one or more SIM cards supporting the vowifi function. The user may insert or remove the SIM card supporting the vowifi function through the SIM card interface 195.

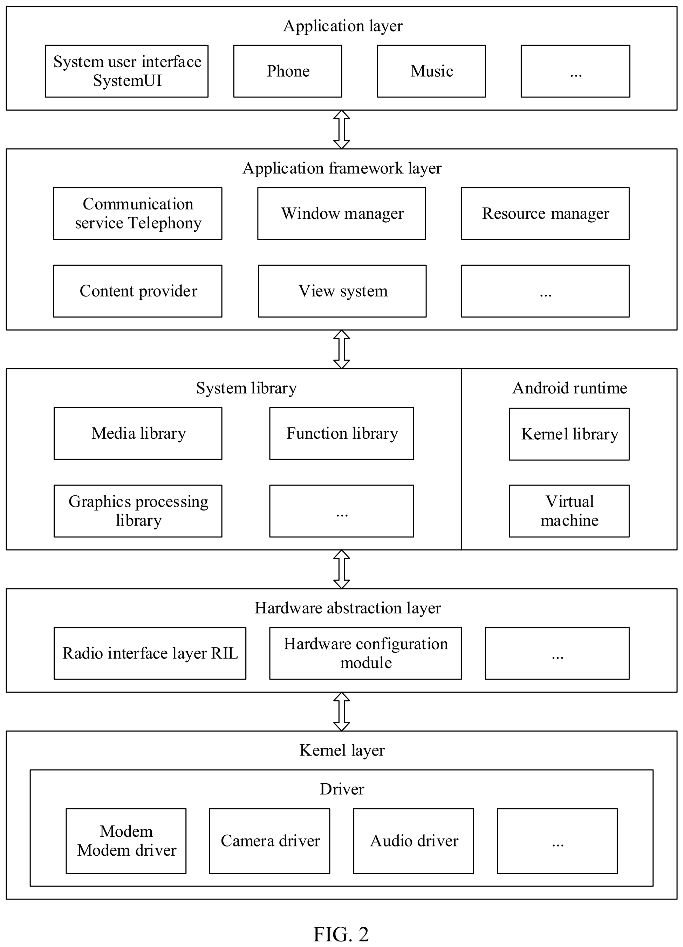

FIG. 2 is a block diagram of a software structure of an electronic device according to an embodiment of this application. In the layered architecture, software is divided into several layers, and each layer has a clear role and task. The layers communicate with each other through a software interface. In some embodiments, the Android system is divided into five layers: an application layer, an application framework layer, an Android runtime (Android runtime) and a system library, a hardware adaptation layer (hardware adaptation layer, HAL), and a kernel layer from top to bottom.

The application layer may also be referred to as an application layer, and the application layer may include a series of application packages. As shown in FIG. 2, the application package may include applications such as System user interface (system user interface, SystemUI), Phone, and Music. The applications may include a system application and a third-party application.

SystemUI may be configured to provide some state information, function information, and the like of the electronic device for the user. For example, SystemUI may display a battery level, signal strength, a network connection state, a Bluetooth connection state, and the like.

The application framework layer may also be referred to as a Framework layer, and the Framework layer may provide an application programming interface (application programming interface, API) and a programming framework for an application of the application layer. The Framework layer may include some predefined functions.

As shown in FIG. 2, the Framework layer may include a communication service Telephony, a window manager, a resource manager, a notification manager, a content provider, a view system, and the like.

The communication service Telephony may also be referred to as a Telephony service or a Telephony application. The Telephony service may be used for a communication function, for example, a phone, the Internet, or a short message service (short messaging service, SMS), of the electronic device. In the embodiments of this application, when the SIM card supporting the vowifi function is inserted into the electronic device, the Telephony service may not only send a broadcast indicating a state change of the SIM card, but may also make a call by using the SIM card.

The window manager is configured to manage a window application. The window manager may obtain a size of the display, determine whether there is a status bar, perform screen locking, touch a screen, drag a screen, take a screenshot, and the like.

The resource manager provides various resources, for example, a localized character string, an icon, an image, a layout file, and a video file for the application.

The content provider is configured to implement a data sharing function between different applications, to allow a program to access data in another program, and ensure security of the accessed data.

The view system may be responsible for interface drawing and event processing of the application.

The Android runtime includes a kernel library and a virtual machine. The Android runtime is responsible for control and management of the Android system.

The kernel library includes two parts: a performance function that needs to be invoked in Java language and a kernel library of Android.

The application layer and the Framework layer run in the virtual machine. The virtual machine executes Java files of the application layer and the Framework layer as binary files. The virtual machine is configured to perform functions such as object life cycle management, stack management, thread management, security and exception management, and garbage collection. For example, in the embodiments of this application, the virtual machine may be configured to execute an adding procedure of a vowifi shortcut switch, a removing procedure of the vowifi shortcut switch, a saving procedure of the vowifi shortcut switch, and the like.

The system library may also be referred to as a Native layer, and the Native layer may include a plurality of functional modules. For example, a media library, a function library, and a graphics processing library.

The HAL layer is an abstract layer structure between the kernel layer and the Android runtime. The HAL layer may be an encapsulation for a hardware driver, providing a unified interface for invoking an upper-layer application. The kernel layer is a layer between hardware and software. The kernel layer may include a modem Modem driver, a display driver, a camera driver, an audio driver, and the like. In the embodiments of this application, the modem Modem driver module may further communicate with the HAL layer. For example, the modem Modem driver module may transmit, to the HAL layer, a message or the like used to indicate insertion or removal of the SIM card.

It should be noted that only the Android system is used as an example for description in the embodiments of this application. In another operating system (for example, a Windows system or an IOS system), the solutions of this application can also be implemented provided that functions implemented by the functional modules are similar to those in the embodiments of this application.

The electronic device may provide the vowifi function. It may be understood that when vowifi is used to make a call, the vowifi is not used to make a call by using a network line of the electronic device, but is used to make a call by using a line provided by Wi-Fi.

For ease of description, a mobile phone is used as an electronic device for subsequent description. When a SIM card supporting a vowifi function is inserted into the mobile phone, an icon of a vowifi shortcut switch may be displayed in a control center interface of the mobile phone.

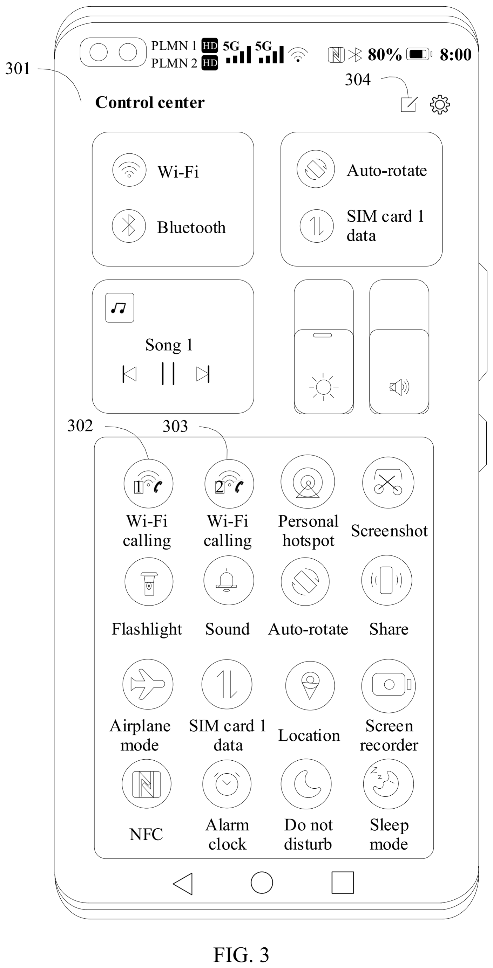

For example, FIG. 3 shows displaying of the vowifi shortcut switch in the control center interface of the mobile phone.

The mobile phone may include the control center interface 301. In some scenarios, the control center interface may also be referred to as a home page. In the control center interface 301, a shortcut switch of each function, an edit button 304, and the like may be displayed. The shortcut switch may enable the user to quickly enable or disable a specific function. For example, the shortcut switch may include a Wi-Fi shortcut switch, a Bluetooth shortcut switch, and a music playing shortcut switch.

In addition, the shortcut switch may include a Wi-Fi calling shortcut switch. A mobile phone supporting two cards is used as an example. When two SIM cards supporting the vowifi function are inserted into the mobile phone, a Wi-Fi calling shortcut switch 302 and a Wi-Fi calling shortcut switch 303 may be displayed in the control center interface 301. The Wi-Fi calling shortcut switch may also be referred to as a vowifi shortcut switch or a vowifi switch. In this case, the Wi-Fi calling shortcut switch 302 may be referred to as a vowifi switch 302, and the Wi-Fi calling shortcut switch 303 may be referred to as a vowifi switch 303.

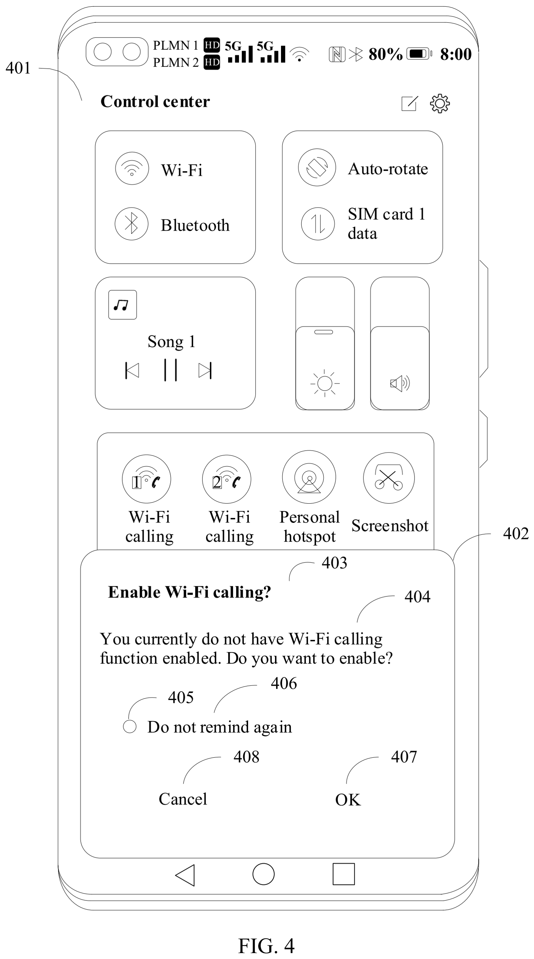

When the user taps the vowifi switch 302 or the vowifi switch 303, as shown in FIG. 4, a pop-up box 402 may be displayed in the control center interface 401. For example, the pop-up box 402 may include a title 403, prompt information 404 used to prompt the user whether a Wi-Fi calling function needs to be enabled, a button 405 for not reminding again, prompt information 406 used to prompt to not remind again, a determining button 407, a cancel button 408, and the like.

The title 403 may include "Enable Wi-Fi calling?" The prompt information 404 may include "You currently do not have the Wi-Fi calling function enabled. Do you want to enable?" The prompt information 406 may include "Do not remind again". Specific content of the title 403, the prompt information 404, and the prompt information 406 is not limited in the embodiments of this application.

It may be understood that if the control center interface 401 receives an operation of the user for triggering the button 405 for not reminding again, when the user taps a vowifi switch 409 or a vowifi switch 410 next time, the pop-up box 402 is not displayed in the control center interface 401 again. If the control center interface 401 does not receive the operation of the user for triggering the button 405 for not reminding again, when the user taps the vowifi switch 409 or the vowifi switch 410 next time, the pop-up box 402 may be displayed in the control center interface 401.

When the control center interface 401 receives an operation of the user for triggering the determining button 407, the mobile phone may cancel displaying of the pop-up box 402 and enable the Wi-Fi calling function. When the control center interface 401 receives an operation of the user for triggering the cancel button 408, the mobile phone may cancel displaying of the pop-up box 402 and disable the Wi-Fi calling function.

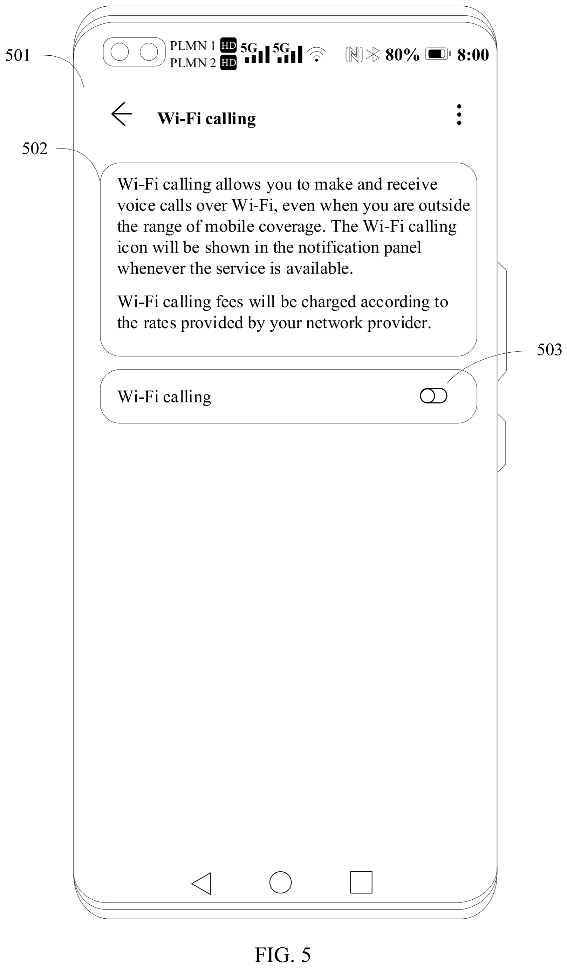

When the user touches and holds the vowifi switch 302 or the vowifi switch 303 in FIG. 3, as shown in FIG. 5, a Wi-Fi calling interface 501 may be displayed. For example, prompt information 502 related to the Wi-Fi calling function, a Wi-Fi calling switch button 503, and the like may be displayed in the Wi-Fi calling interface 501.

It may be understood that if the Wi-Fi calling function is not currently enabled, when the Wi-Fi calling interface 501 receives an operation of the user for triggering the Wi-Fi calling switch button 503, the Wi-Fi calling function may be enabled. If the Wi-Fi calling function is currently enabled, when the Wi-Fi calling interface 501 receives the operation of the user for triggering the Wi-Fi calling switch button 503, the Wi-Fi calling function may be disabled.

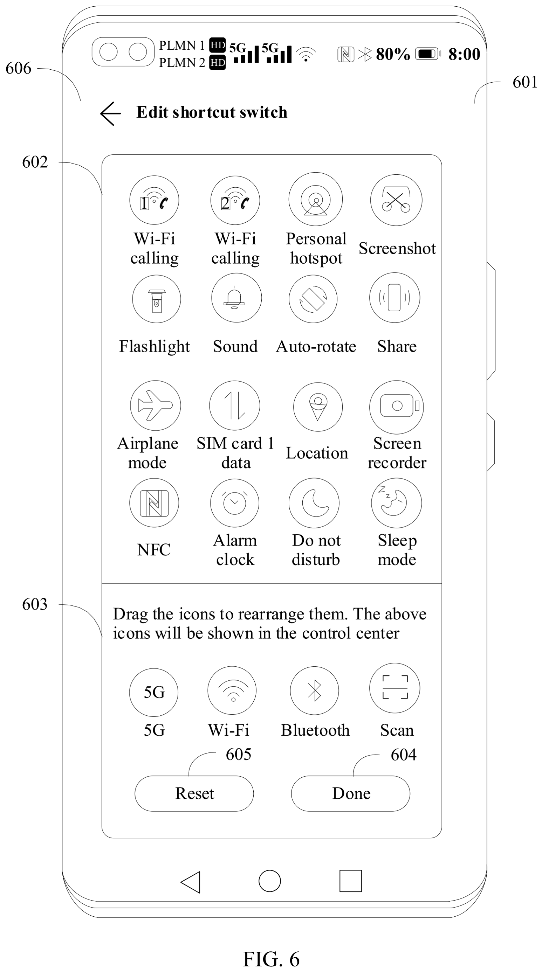

When the user taps the edit button 304 in FIG. 3, as shown in FIG. 6, an edit shortcut switch interface 601 may be displayed. In some scenarios, the edit shortcut switch interface may also be referred to as an edit page. For example, the edit shortcut switch interface 601 may include an area 602, an area 603, a done button 604, a reset button 605, a back button 606, and the like.

The user may drag a shortcut switch in the area 602 and a shortcut switch in the area 603 to sort them. The shortcut switch in the area 602 may be displayed in the control center interface 301, and the shortcut switch in the area 603 is not displayed in the control center interface 301.

When the edit shortcut switch interface 601 receives an operation of the user for triggering the done button 604 or the back button 606, a display sequence of shortcut switches after the user drags the shortcut switches may be saved, and the user goes back to the control center interface 301 in FIG. 3. When the edit shortcut switch interface 601 receives an operation of the user for triggering the reset button 605, shortcut switches in the edit shortcut switch interface 601 may be displayed based on a preset sequence in the mobile phone, and the user may continue to drag the shortcut switch in the area 602 and the shortcut switch in the area 603 in the edit shortcut switch interface 601 to sort them.

It should be noted that the vowifi function in the mobile phone may be applied at home and abroad. The foregoing interfaces related to the vowifi function are only present in Chinese. The interfaces may also be displayed in another language. This is not limited in the embodiments of this application.

It may be understood that a quantity of shortcut switches displayed in the control center interface 301 in FIG. 3 is limited. For ease of description, that 20 shortcut switches may be displayed in the control center interface 301 is used as an example for description subsequently. When the quantity of shortcut switches is greater than 20, some shortcut switches cannot be displayed in the control center interface 301, and remaining 20 shortcut switches may be displayed in the edit shortcut switch interface 601.

In a possible implementation, a default list may be configured in the mobile phone, and the default list may save identifiers of the shortcut switches and positions corresponding to the identifiers of the shortcut switches. For example, the default list may save the identifiers of the shortcut switches in the control center interface and the corresponding positions, or may save identifiers of some preset shortcut switches in the edit shortcut switch interface and corresponding positions. In this way, the mobile phone may display the shortcut switches in the control center interface 301 based on configuration information in the default list.

For example, the default list may be preconfigured in the mobile phone. In the default list, a position of the vowifi switch 302 and a position of the vowifi switch 303 may be set. When the vowifi switch 302 and the vowifi switch 303 are located at first 20 positions in the default list, the vowifi switch 302 and the vowifi switch 303 may be displayed in the control center interface 301. When the vowifi switch 302 and the vowifi switch 303 are located after the 20 positions in the default list, the vowifi switch 302 and the vowifi switch 303 are not displayed in the control center interface 301, and the vowifi switch 302 and the vowifi switch 303 are displayed in the edit shortcut switch interface 601.

It may be understood that for some areas in which the Wi-Fi calling function is frequently used, to meet a requirement of an operator and improve user experience, a position of the vowifi switch 302 or the vowifi switch 303 in the default list may be configured at a position conveniently searched by the user. For example, the vowifi switch 302 may be configured at the 1^{st} position or the 19^{th} position in the default list, and the vowifi switch 303 may be configured at the 2^{nd} position or the 20^{th} position in the default list.

For ease of description, the following uses an example in which the vowifi switch 302 is configured at the 1^{st} position in the default list, and the vowifi switch 303 is configured at the 2^{nd} position in the default list for description. The vowifi switch 302 may correspond to a SIM card 1, and the vowifi switch 303 may correspond to a SIM card 2.

It may be understood that a processing procedure related to the vowifi switch may include an adding procedure of the vowifi switch, a removing procedure of the vowifi shortcut switch, a saving procedure of the vowifi shortcut switch when the position is moved, and the like.

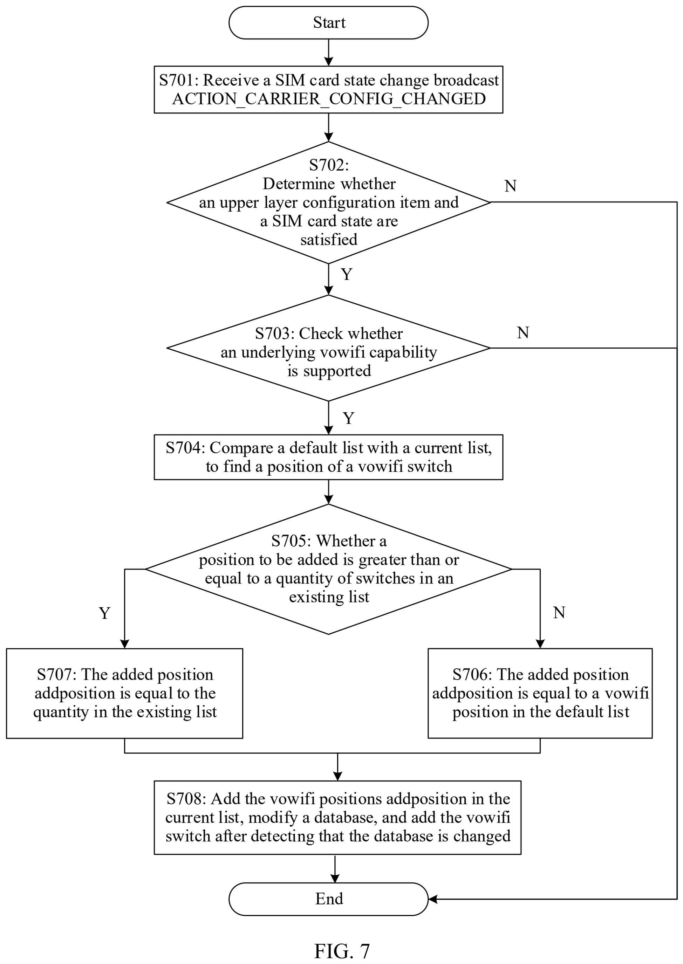

FIG. 7 shows the adding procedure of the vowifi switch when the SIM card supporting the vowifi function is inserted into the mobile phone.

S701: Receive a SIM card state change broadcast ACTION_CARRIER_CONFIG_CHANGED.

When the SIM card supporting the vowifi function is inserted into the mobile phone, a modem Modem driver module at a driver layer may transmit, to a radio interface layer (radio interface layer, RIL) of a HAL layer, a message used to indicate insertion of the SIM card. The RIL may transmit the message used to indicate insertion of the SIM card to a telephony service at a Framework layer. After receiving the message, the telephony service may send the broadcast ACTION_CARRIER_CONFIG_CHANGED, where the broadcast may be used to indicate that a SIM card state is changed.

After receiving the broadcast, a SystemUI at an application layer may obtain related information of the SIM card. For example, when the mobile phone supports two cards, related information of the SIM card may include identification information used to distinguish whether the SIM card is the SIM card 1 or the SIM card 2.

After the SystemUI obtains the related information of the SIM card, the SystemUI may perform step S702.

S702: Determine whether an upper layer configuration item and the SIM card state are satisfied.

The SystemUI may invoke a related interface to obtain the configuration item is_show_vowifi_tile_flag from a CarrierConfigManager card management module, where the configuration item may be used to identify whether the vowifi switch needs to be displayed in the control center interface. For example, when the configuration item is true, it may indicate that the vowifi switch is displayed in the control center interface; or when the configuration item is false, a null value, or another non-true value, it may indicate that the vowifi switch is not displayed in the control center interface.

In addition, the SystemUI may further invoke a related interface of the telephony service to obtain the SIM card state. The SIM card state may include a ready state, an absent state, and the like. The ready state may indicate that the SIM card is in a normal state and can be used. The absent state may indicate that the SIM card does not exist.

If the configuration item is true and the SIM state is the ready state, the SystemUI may perform step S703.

If the configuration item is not true and/or the SIM state is not the ready state, it indicates that the vowifi switch does not need to be displayed in the control center interface and/or the SIM state is not normal. As a result, the vowifi switch cannot be displayed in the control center interface, and the subsequent adding procedure of the vowifi switch does not need to be continued for execution.

S703: Check whether an underlying vowifi function is supported.

The SystemUI may invoke the related interface of the telephony service to determine whether the SIM card supports the vowifi function.

If the SIM card supports the vowifi function, step S704 may be performed.

If the SIM card does not support the vowifi function, the vowifi switch is not displayed in the control center interface, and the subsequent adding procedure of the vowifi switch does not need to be continued for execution.

S704: Compare the default list with a current list, to find the position of the vowifi switch.

The SystemUI may obtain the default list and the current list. The current list may be used to save the identifier of the shortcut switch displayed in the control center interface and the corresponding position. A size of the current list may be equal to a quantity of shortcut switches displayed in the control center interface. For example, if 16 shortcut switches are displayed in the control center interface, the size of the current list is 16; or if 20 shortcut switches are displayed in the control center interface, the size of the current list is 20.

In a possible implementation, the SystemUI may first invoke the related interface to obtain a configuration item cust_qs_tile_rules. If the position of the vowifi switch is configured in the configuration item, the SystemUI may obtain an updated default list based on the default list and the position of the vowifi switch in the configuration item. The vowifi position in the updated default list takes effect.

Further, the SystemUI may perform step S705, and determine the position of the vowifi switch in the current list by using the updated default list and the current list.

S705: Whether a position to be added is greater than or equal to a quantity of shortcut switches in an existing list.

For example, that the quantity of shortcut switches in the current list is 16 is used as an example. If the to-be-added position of the vowifi switch is the 1^{st} position in the default list, step S706 is performed because the position 1 is less than the quantity 16 of shortcut switches in the existing list.

If the to-be-added position of the vowifi switch is the 19^{th} position in the default list, step S707 is performed because the position 19 is greater than the quantity 16 of shortcut switches in the existing list.

S706: The added position addposition is equal to the vowifi position in the default list.

Because the to-be-added position of the vowifi switch is the 1^{st} position in the default list, and is less than the quantity 16 of shortcut switches in the existing list, the to-be-added position addposition of the vowifi switch in the existing list is equal to the position of the vowifi switch in the default list, namely, the 1^{st} position, that is, addposition=0. It may be understood that a sequence number of the list starts from 0. Therefore, addposition=0 may indicate that the position of the vowifi switch in the existing list is the 1^{st} position, and addposition=1 may indicate that the position of the vowifi switch in the existing list is the 2^{nd} position. The rest may be deduced by analogy.

After a value of addposition is determined, the SystemUI may perform step S708.

S707: The added position addposition is equal to the quantity of shortcut switches in the existing list.

Because the to-be-added position of the vowifi switch is the 19^{th} position in the default list, and is greater than the quantity 16 of shortcut switches in the existing list, the to-be-added position addposition of the vowifi switch in the existing list is equal to the quantity of shortcut switches in the existing list, that is, addposition=16. It may be understood that addposition= 16 may indicate that the position of the vowifi switch in the existing list is the 17^{th} position.

After a value of addposition is determined, the SystemUI may perform step S708.

S708: Add the vowifi position addposition in the current list, modify a database, and add the vowifi switch after monitoring a database change.

After determining the position of the vowifi switch in the current list, the SystemUI may add a label of the vowifi switch to the corresponding position in the current list.

That the mobile phone supports two cards is used as an example. A label of the vowifi switch of the SIM card 1 may be am Vowifi, and a label of the vowifi switch of the SIM card 2 may be amVowifi 2. Specifically, a label of the vowifi switch of each SIM card is set. This is not limited in this embodiment of this application. After the label of the vowifi switch of the SIM card 1 and the label of the vowifi switch of the SIM card 2 are added to the current list, the SystemUI may write the updated current list into the database. For example, the database may be a QS_TILES database.

It may be understood that when the SystemUI detects that the database is changed, an onTuningChanged() function may be triggered. The function may traverse the updated current list, and create an instance object of the vowifi switch of the SIM card 1 and an instance object of the vowifi switch of the SIM card 2; or may add the vowifi switch of the SIM card 1 and the vowifi switch of the SIM card 2 to corresponding positions in the control center interface.

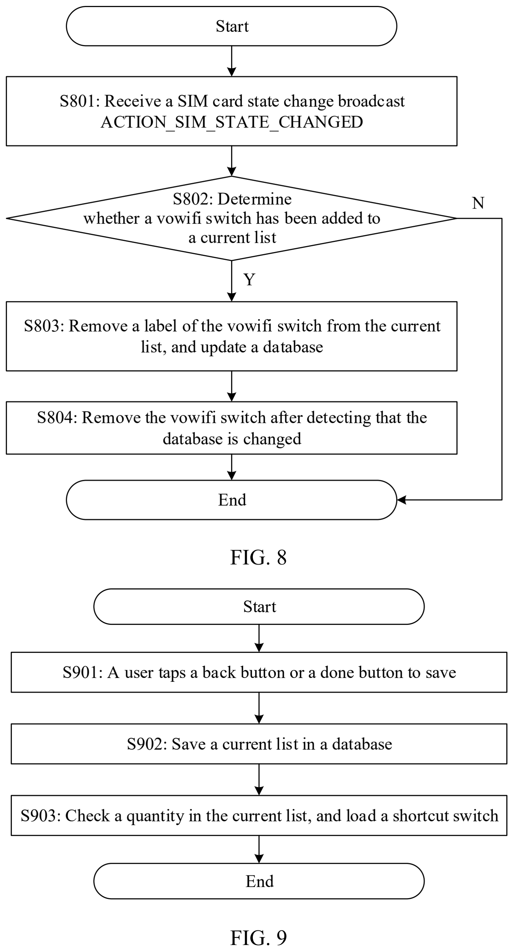

FIG. 8 shows the removing procedure of the vowifi switch when the user removes the SIM card supporting the vowifi function from the mobile phone.

S801: Receive a SIM card state change broadcast ACTION_SIM_STATE_CHANGED.

When the user removes the SIM card supporting the vowifi function from the mobile phone, a modem Modem driver module may transmit, to a RIL, a message used to indicate removal of the SIM card. Then, the RIL may transmit the message used to indicate removal of the SIM card to a telephony service. After receiving the message, the telephony service may send the broadcast ACTION_SIM_STATE_CHANGED, where the broadcast may be used to indicate that a SIM card state is changed.

After receiving the broadcast, the SystemUI may determine whether the current SIM card is in an absent state. If the SIM state is the absent state, step S802 may be performed.

S802: Determine whether the vowifi switch has been added to the current list.

The SystemUI may determine whether the vowifi switch has been added to the current list. In a possible implementation, if the vowifi switch is added to the current list, the SystemUI may add a flag bit to the vowifi switch. For example, when the flag bit is true, it may indicate that the vowifi switch is added to the current list; or when the flag bit is false, it may indicate that the vowifi switch is not added to the current list. A specific data type and a specific value of the flag bit are not limited in this embodiment of this application.

If the SystemUI determines that the vowifi switch is added to the current list, step S803 may be performed.

If the SystemUI determines that the vowifi switch is not added to the current list, a procedure of removing the label of the vowifi switch from the current list does not need to be performed.

S803: Remove the label of the vowifi switch from the current list, and update a database.

The SystemUI may obtain the current list, remove the label of the vowifi switch from the current list, and write the updated current list into the database.

S804: Remove the vowifi switch after detecting that the database is changed.

When the SystemUI detects that the database is changed, an onTuningChanged () function may be triggered. The function may delete an instance object of the vowifi switch, and remove the vowifi switch in the control center interface.

FIG. 9 shows the saving procedure when the position of the vowifi shortcut switch moves.

S901: The user taps a back button or a done button to save.

It may be learned from the foregoing related descriptions of the embodiment corresponding to FIG. 6 that the user may drag the position of the shortcut switch in the edit shortcut switch interface 601, to implement customized sorting of the shortcut switch. When the user completes sorting of the shortcut switch, and taps the done button 604 or the back button 606, the SystemUI may invoke a save() function to save a sequence of the shortcut switch dragged by the user, and perform step S902.

S902: Save the current list in the database.

In an execution procedure of the save() function, the current list used to save the sequence of the shortcut switches dragged by the user in the database, to change the sequence of the shortcut switches displayed in the control center interface.

It may be understood that in the foregoing embodiment corresponding to FIG. 6, if the user drags the vowifi switch in the area 602 to the area 603 and performs the saving procedure, the vowifi switch is not displayed in the control center interface. In this case, the current list does not include the identifier of the vowifi switch and the corresponding position.

S903: Check a quantity in the current list, and load the shortcut switch.

When the SystemUI detects that the database is changed, an onTuningChanged() function may be triggered. The function may display the dragged vowifi switch in the control center interface.

In a possible scenario, after the user drags the position of the vowifi switch in the edit shortcut switch interface, the SIM card supporting the vowifi function may be removed, and subsequently, the SIM card supporting the vowifi function may be inserted again.

In this scenario, after the user removes the SIM card supporting the vowifi function, the SystemUI may remove the label of the vowifi switch from the current list, and may not display the vowifi switch in the control center interface. When the user inserts the SIM card supporting the vowifi function again, the SystemUI may execute the adding procedure of the vowifi switch in the foregoing embodiment corresponding to FIG. 7, and determine the position of the vowifi switch based on the default list and the current list.

However, because a default position, of the vowifi switch, configured in the default list is not the user-customized position of the vowifi switch. The user-customized position, of the vowifi switch, previously saved in the current list has been deleted when the user removes the SIM card. In this way, neither the default list nor the current list includes the user-customized position of the vowifi switch. Therefore, when the SIM card is inserted into the mobile phone again, the position of the vowifi switch is not a modified position of the user, that is, previous modification of the user on the position of the vowifi switch does not take effect. Consequently, user experience is reduced.

In view of this, the embodiments of this application provide the interface display method, so that when the user modifies the position of the vowifi switch displayed in the control center interface, the electronic device can save the modification operation of the user. When the SIM card is inserted into the electronic device again, the saved position, of the vowifi switch, previously modified by the user may be obtained, so that the position at which the vowifi switch is displayed is the position modified by the user. In this way, modification of the user on the position of the vowifi switch may take effect, thereby improving user experience.

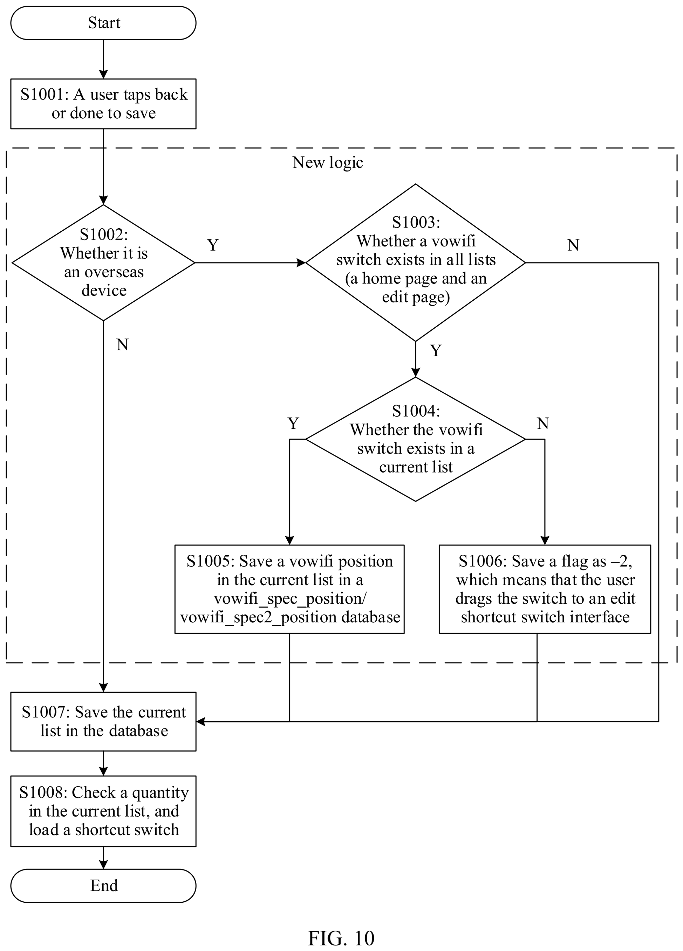

For example, FIG. 10 shows a saving procedure of a vowifi switch for newly saving a modification operation of a user according to an embodiment of this application.

S1001: The user taps a back button or a done button to save.

For this step, refer to related descriptions of step S901 in the foregoing embodiment corresponding to FIG. 9. Details are not described again. It should be noted that when the user taps the back button or the done button to save, a SystemUI may perform step S1002 newly added in this embodiment of this application.

S1002: Whether it is an overseas device.

It may be understood that a large quantity of overseas operators may provide SIM cards supporting a vowifi function, that is, electronic devices that use SIM cards supporting the vowifi function are mostly electronic devices used abroad. Therefore, an overseas electronic device is used as an example for description in this embodiment of this application.

The SystemUI may obtain, from the mobile phone, a configuration item used to identify whether it is an overseas device. For example, when the configuration item is true, it may indicate that the device is the overseas device; or when the configuration item is non-true, it may indicate that the device is a domestic device. A specific data type and a specific value of the configuration item are not limited in this embodiment of this application.

If it is determined that the device is the overseas device, step S1003 may be performed; or if it is determined that the device is not the overseas device, step S1007 may be performed.

Optionally, if the domestic electronic device may also use the SIM card supporting the vowifi function, step S1002 may not need to be performed, and step S 1003 may be performed.

S1003: Whether the vowifi switch exists in all lists (a home page and an edit page).

All the lists may also be referred to as a full list, and the list may save identifiers of all shortcut switches and corresponding positions. It may be understood that the home page may be understood as the control center interface 301 in the foregoing embodiment corresponding to FIG. 3, and the edit page may be understood as the edit shortcut switch 601 in the foregoing embodiment corresponding to FIG. 6.

If the vowifi switch exists in the full list, it needs to be further determined whether the vowifi switch exists in a current list, and step S1004 may be performed.

If the vowifi switch does not exist in the full list, it indicates that the SIM card is not inserted in the current mobile phone, the SIM card inserted in the current mobile phone does not support the vowifi function, or the like, it is not necessary to save the position, of the vowifi switch, modified by the user, and step S1007 may be performed.

S1004: Whether the vowifi switch exists in the current list.

When the user modifies the position of the shortcut switch in the edit shortcut page and tap the back button or the done button to save, the SystemUI may determine whether the vowifi switch exists in the current list.

If the vowifi switch exists in the current list, it indicates that the vowifi switch is displayed in the control center interface. In this case, step S1005 may be performed, so that the position of the vowifi switch is saved in the current list.

If the vowifi switch does not exist in the current list, it indicates that the vowifi switch is not displayed in the control center interface, but in the edit shortcut page. In this case, step S1006 may be performed, so that the vowifi switch is marked and saved in the edit shortcut page.

S1005: Save the position of the vowifi switch in the current list in a vowifi_spec_position database or a vowifi_spec2_position database.

When the vowifi switch is displayed in the control center interface, the position of the vowifi switch in the current list can be saved in the database.

For example, if the mobile phone supports two cards, a position of a vowifi switch corresponding to a SIM card 1 and a position of a vowifi switch corresponding to a SIM card 2 may be saved in a same database, or may be saved in different databases. For example, the databases may include the vowifi _spec_position database and the vowifi_spec2_position database. The position of the vowifi switch corresponding to the SIM card 1 may be saved in the vowifi_spec_position database, and the position of the vowifi switch corresponding to the SIM card 2 may be saved in the vowifi_spec2_position database. A specific name of the database is not limited in this embodiment of this application.

In a possible implementation, in the vowifi_spec_position database or the vowifi_spec2_position database, the position of the vowifi switch may be saved in a key value pair manner. A specific manner of saving the position of the vowifi switch in the database is not limited in this embodiment of this application. When the position, of the vowifi switch, obtained from the database is empty, it indicates that the position of the vowifi switch has never been saved, and the position of the vowifi switch may be set to a default value in the database. For example, the default value may be -1.

S1006: Save a flag as -2, which means that the user drags the vowifi switch to an edit shortcut switch interface.

When the vowifi switch is not displayed in the control center interface, the vowifi switch can be marked as -2, and saved in the database.

For example, if the mobile phone supports two cards, the position of the vowifi switch corresponding to the SIM card 1 may be marked as -2, and saved in the vowifi_spec_position database; and the position of the vowifi switch corresponding to the SIM card 2 may be marked as -2, and saved in the vowifi_spec2_position database.

It may be understood that the foregoing flag may also be set to another value not -1. This is not limited in this embodiment of this application. In this embodiment of this application, for a case in which the vowifi switch is not added to the mobile phone, and the vowifi switch is not displayed in the control center interface and the edit shortcut switch interface, the vowifi switch may be correspondingly marked as -1. Therefore, for ease of distinguishing, the foregoing flag cannot be set to -1.

For ease of description, in this embodiment of this application, a case in which the vowifi switch is not added to the mobile phone, and the vowifi switch is not displayed in the control center interface and the edit shortcut switch interface is referred to as a case 1, and a case in which the user drags the vowifi switch to the edit shortcut switch interface is referred to as a case 2. It may be understood that a flag corresponding to the case 1 and a flag corresponding to the case 2 may be respectively set to different values. A specific flag value corresponding to the case 1 and a specific flag value corresponding to the case 2 are not limited in this embodiment of this application.

S1007: Save the current list to a QS_TILES database.

For this step, refer to related descriptions of step S902 in the foregoing embodiment corresponding to FIG. 9. Details are not described again.

S1008: Check a quantity in the current list, and load the shortcut switch.

For this step, refer to related descriptions of step S903 in the foregoing embodiment corresponding to FIG. 9. Details are not described again.

A modification operation of the user may be saved by using the saving procedure of the vowifi switch in the foregoing embodiment corresponding to FIG. 10. In this way, when the user inserts the SIM card supporting the vowifi function again, a problem of losing the previous modification operation of the user does not occur in the control center interface, thereby improving user experience.

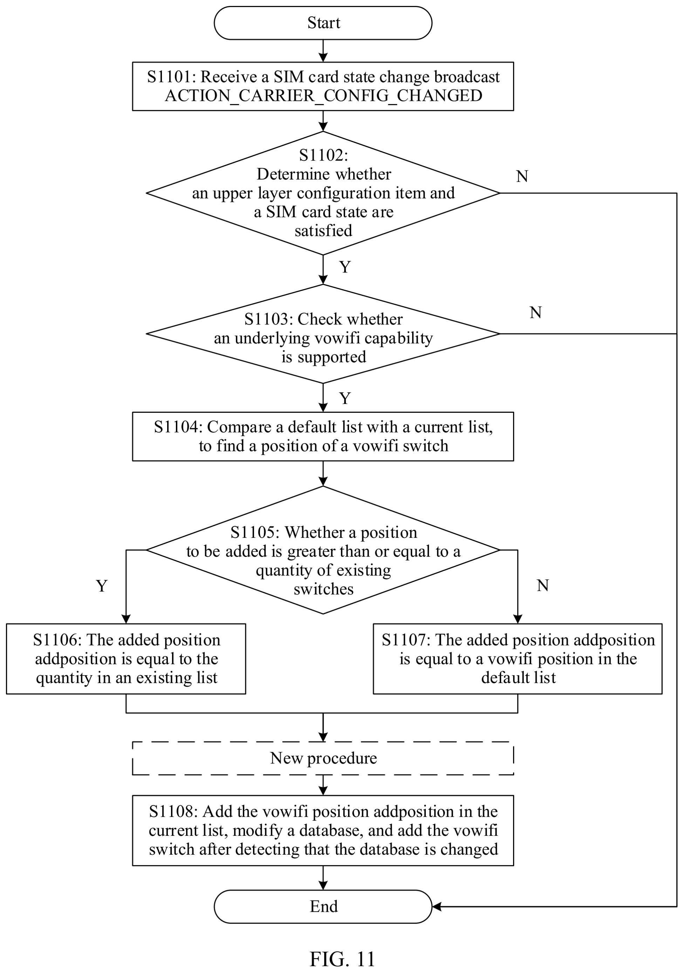

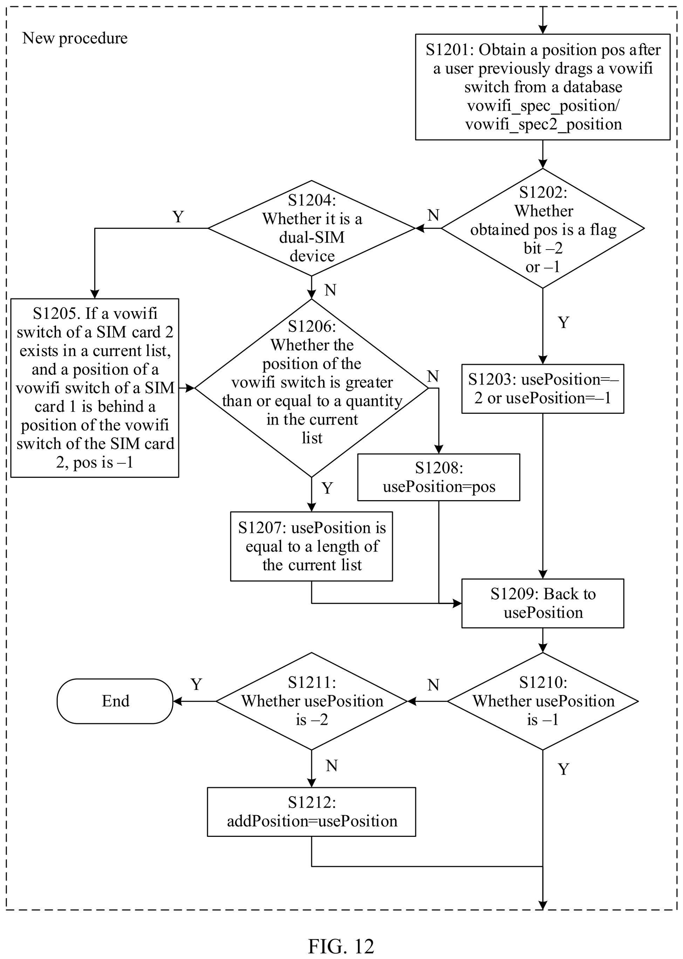

After the user drags the position of the vowifi switch in the edit shortcut switch interface, when the user removes the SIM card supporting the vowifi function and inserts the SIM card again, the following adding procedure of the vowifi switch provided in the embodiments of this application shown in FIG. 11 and FIG. 12 may be executed.

As shown in FIG. 11, the adding procedure of the vowifi switch provided in the embodiment of this application is the original adding procedure of the vowifi switch provided in the embodiment corresponding to FIG. 7 with a new procedure added. A specific new procedure may be added to a dashed box in FIG. 11. It should be noted that for step S1101 to step S1107 and step S1108 in FIG. 11, refer to related descriptions of step S701 to step S708 in the foregoing embodiment corresponding to FIG. 7. Details are not described again. For the new procedure in FIG. 11, refer to the following related descriptions of the embodiment corresponding to FIG. 12.

FIG. 12 shows a new procedure in an adding procedure of a vowifi switch according to an embodiment of this application.

S1201: Obtain a position pos after a user previously drags a vowifi switch from a vowifi_spec_position database or a vowifi _spec2_position database.

According to step S1106 or step S1107 in the embodiment corresponding to FIG. 11, a SystemUI may determine a position of the vowifi switch in a current list. It may be understood that in this case, the obtained position of the vowifi switch in the current list does not consider a modification operation of the user. Therefore, the vowifi switch position pos after the vowifi switch is dragged by the user further needs to be obtained from the database in which the modification operation of the user is saved.

If the mobile phone supports two cards, the SystemUI may obtain, from the vowifi_spec_position database, the owifi switch position pos after a vowifi switch, corresponding to a SIM card 1, previously dragged by the user; and obtain, from the vowifi_spec2_position database, the vowifi switch position pos after a vowifi switch, corresponding to a SIM card 2, previously dragged by the user.

After the position pos of the vowifi switch is obtained, the SystemUI may perform step S1202.

S1202: Whether the obtained pos is a flag bit -2 or -1.

The SystemUI may determine whether the obtained position pos is the flag bit -2 or - 1. If pos is the flag bit -2 or -1, it indicates that the vowifi switch is not in the current list, that is, the vowifi switch is not displayed in the control center interface, and step S1203 may be performed.

It may be understood that when pos is the flag bit-2, it indicates that the user previously moved the vowifi switch to an edit shortcut switch interface. When pos is the flag bit -1, it indicates that the vowifi switch has never been added to the mobile phone, and the vowifi switch has not been displayed in the control center interface and the edit shortcut switch interface.

If pos is not the flag bit -2 or -1, it indicates that after the user previously modified the position of the vowifi switch, the vowifi switch may be displayed in the control center interface. In this case, the vowifi switch is located in the current list, and the vowifi switch may be displayed in the control center interface. In this case, the SystemUI may perform step S1204.

S1203: usePosition=-2 or usePosition=-1.

When pos obtained by the SystemUI from the database is the flag bit -2, the variable usePosition may be assigned with a value -2. When pos obtained by the SystemUI from the database is the flag bit -1, the variable usePosition may be assigned with a value -1. The variable usePosition may be used to indicate the position, of the vowifi switch, previously modified by the user and obtained by the SystemUI.

After assignment of usePosition is completed, step S1209 may be performed.

S1204: Whether it is a dual-SIM device.

In a possible implementation, the SystemUI may invoke a related interface of a telephony service to determine whether it is the dual-SIM device.

If the mobile phone is a dual-SIM device, step S1205 may be performed.

If the mobile phone is not a dual-SIM device, step S1206 may be performed.

S1205: If the vowifi switch of the SIM card 2 exists in the current list, and the position of the vowifi switch of the SIM card 2 is located behind the position of the vowifi switch of the SIM card 1, the position of the vowifi switch of the SIM card 2 is pos -1.

In a possible scenario, when the SIM card 1 and the SIM card 2 are inserted into the mobile phone, broadcasts sent by the telephony service may have a sequence. For example, the SystemUI may first receive a broadcast for insertion of the SIM card 1, and then receive a broadcast for insertion of the SIM card 2. Alternatively, the SystemUI may first receive a broadcast for insertion of the SIM card 2, and then receive a broadcast for insertion of the SIM card 1.

An example in which the position of the vowifi switch of the SIM card 1 is the 1^{st} position in the control center interface, and the position of the vowifi switch of the SIM card 2 is the 2^{nd} position in the control center interface is used. In this case, the position pos of the vowifi switch of the SIM card 1 is 0, and the position pos of the vowifi switch of the SIM card 2 is 1, that is, the position of the vowifi switch of the SIM card 2 is behind the position of the vowifi switch of the SIM card 1.

If the SystemUI first receives the broadcast for insertion of the SIM card 2, the SystemUI may display the vowifi switch of the SIM card 2 in the 2^{nd} position in the control center interface based on the position pos of the vowifi switch of the SIM card 2 being 1. After the SystemUI receives the broadcast for insertion of the SIM card 1 again, the SystemUI may display the vowifi switch of the SIM card 1 in the 1^{st} position in the control center interface based on the position pos of the vowifi switch of the SIM card 1 being 0. In this case, a position of another shortcut switch in the control center interface is moved backward one position, and the position of the vowifi switch of the SIM card 2 is also moved backward one position, so that the position of the vowifi switch of the SIM card 2 is displayed at the 3^{rd} position in the control center interface instead of the preset 2^{nd} position.

Therefore, in this scenario, the position pos of the vowifi switch of the SIM card 2 needs to be set as -1, so that the position of the vowifi switch of the SIM card 2 may be moved forward one position in the control center interface, and is displayed at the 2^{nd} position in the control center interface, and the vowifi switch of the SIM card 2 is displayed at a correct position.

After a position pos of a vowifi switch of each SIM card is obtained, the SystemUI may perform step S1206.

S1206: Whether the position of the vowifi switch is greater than or equal to a quantity in the current list.

If the position pos of the vowifi switch is greater than or equal to a quantity of shortcut switches in the current list, step S1207 may be performed.

If the position pos of the vowifi switch is less than the quantity of shortcut switches in the current list, step S1208 may be performed.

S1207: usePosition is equal to a length of the current list.

If the position pos of the vowifi switch is greater than or equal to the quantity of shortcut switches in the current list, it indicates that the vowifi switch may be displayed behind another shortcut switch in the control center interface. Therefore, usePosition may be equal to the length of the current list, and step S1209 is performed.

S1208: usePosition=pos.

If the position pos of the vowifi switch is less than the quantity of shortcut switches in the current list, the SystemUI may display the vowifi switch in the control center interface based on a value of pos. Therefore, usePosition may be equal to pos, and step S1209 is performed.

S1209: Back to usePosition.

According to step S1201 to step S1208, the SystemUI may obtain the value of usePosition, and perform step S1210 to determine the value of usePosition.

S1210: Whether usePosition is -1.

If usePosition is -1, it indicates that the vowifi switch has never been added to the mobile phone, and the vowifi switch has not been displayed in the control center interface and the edit shortcut switch interface. In this case, the SystemUI may perform step S1108 in the foregoing embodiment corresponding to FIG. 11, and add the vowifi switch based on the original adding procedure of the vowifi switch. For specific step S1108, refer to related descriptions in the foregoing embodiment corresponding to FIG. 11. Details are not described again.

If usePosition is not -1, step S1211 may be performed, and the value of usePosition is further determined.

S1211: Whether usePosition is -2.

If usePosition is -2, it indicates that the user previously drags the vowifi switch to the edit shortcut switch interface, and the vowifi switch does not need to be displayed in the control center interface. In this case, the adding procedure of the vowifi switch to the control center interface does not need to be continued for execution, and therefore the value does not need to be assigned to the addPosition.

If usePosition is not -2, it indicates that after the user previously modifies the position of the vowifi switch, the vowifi switch may be displayed in the control center interface, and step S1212 may be performed.

S1212: addPosition=usePosition.

When it is determined that the vowifi switch needs to be displayed in the control center interface, and the vowifi switch is at the position usePosition, the SystemUI may set the to-be-added position addPosition of the vowifi switch in the current list to usePosition, and perform step S1108 in the embodiment corresponding to FIG. 11. In the current list, the position addposition of the vowifi switch is added, and a QS_TILES database is modified. After it is detected that the QS_TILES database is changed, the vowifi switch is added to the control center interface.

Optionally, the new procedure in the foregoing embodiment corresponding to FIG. 12 and a sequence of performing step S1105 to step S1107 in the embodiment corresponding to FIG. 11 may not be limited. In other words, the SystemUI may also obtain the position, of the vowifi switch, previously modified by the user, and then determine a relationship between the position of the vowifi switch and a quantity of shortcut switches in an existing list. This is not limited in this embodiment of this application.

After the user modifies the position of the vowifi switch displayed in the control center interface, and removes the SIM card supporting the vowifi function, when the user inserts the SIM card supporting the vowifi function again, the SystemUI may obtain the position, of the vowifi switch, previously set by the user, so that modification of the position of the vowifi switch by the user takes effect, thereby improving user experience.

It may be understood that the interface display method in this embodiment of this application may also be used in another scenario in which a shortcut switch is displayed with a card, for example, a mobile data switch of a SIM card displayed in a control center interface. This is not limited in this embodiment of this application. The interface display method in this embodiment of this application is applicable to a scenario in which a shortcut icon of an application is displayed.

For example, a shortcut icon of an application in the area 603 in the edit shortcut switch interface 606 in FIG. 6 is used as an example. When the user moves the shortcut icon from the area 603 to the area 602, and taps the back button or the done button, the SystemUI may save, in the database, a position of the shortcut icon in the area 602. When the SystemUI detects that the database is changed, the shortcut icon may be displayed in the control center interface.

After the user moves the shortcut icon of the application to the control center interface, when the user uninstalls the application and then installs the application again, the saved position of the shortcut icon in the control center interface may be obtained and displayed in the control center interface. In this way, modification of the user on the position of the shortcut icon of the application may take effect, thereby improving user experience.

The method in the embodiments of this application is described below in detail by using specific embodiments. The following embodiments may be combined with each other or independently implemented, and same or similar concepts or processes may not be described in detail in some embodiments.

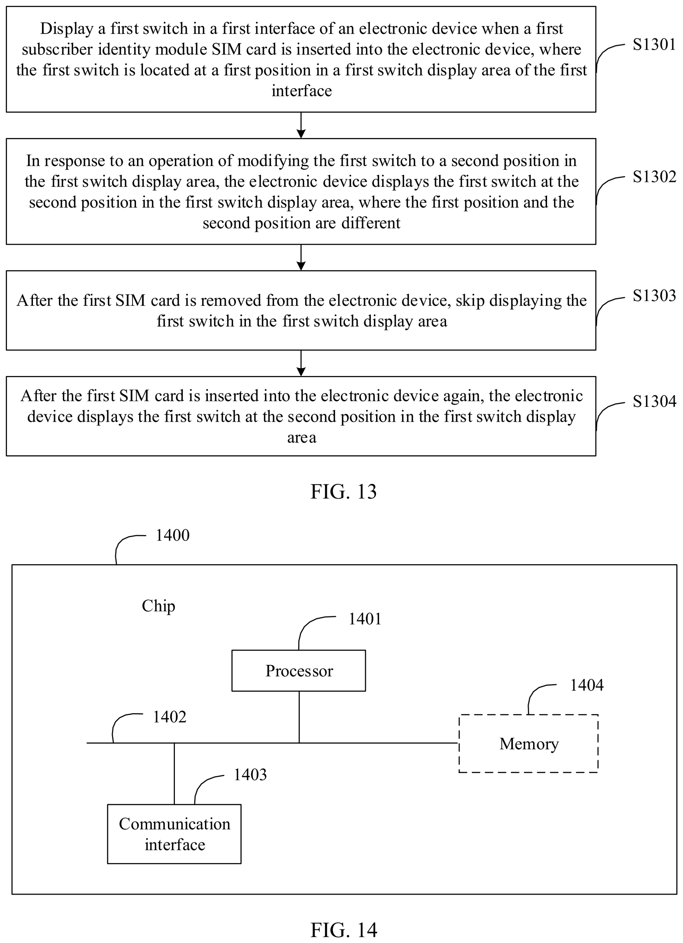

FIG. 13 shows an interface display method according to an embodiment of this application. The method includes the following steps.

S1301: Display a first switch in a first interface of an electronic device when a first subscriber identity module SIM card is inserted into the electronic device, where the first switch is located at a first position in a first switch display area of the first interface.

In this embodiment of this application, the electronic device may include the mobile phone in the foregoing embodiments. The first interface may be understood as the control center interface in the embodiment corresponding to FIG. 3, or may be understood as another interface capable of displaying a shortcut switch. This is not limited in this embodiment of this application.

The first subscriber identity module SIM card may include the SIM card supporting the vowifi function in the foregoing embodiments, and may also include the SIM card supporting the mobile data function. This is not limited in this embodiment of this application. It may be understood that a function provided by the first subscriber identity module SIM card may display the corresponding shortcut switch in the first interface.

The first switch may include the vowifi switch in the foregoing embodiments, and may also include the mobile data switch. This is not limited in this embodiment of this application.

The first switch display area may be understood as the control center interface 301 for displaying the shortcut switch in the foregoing embodiment corresponding to FIG. 3, or may be understood as an area, in the control center interface 301, in which the shortcut switch can be displayed.

The first position may be understood as a position at which the first switch is located in the first switch display area before a user moves the position of the first switch. The first position may also be understood as a position at which the first switch is displayed by default when the SIM card is inserted into the mobile phone.

S1302: In response to an operation of modifying the first switch to a second position in the first switch display area, the electronic device displays the first switch at the second position in the first switch display area, where the first position and the second position are different.

In this embodiment of this application, the second position may be understood as a position at which the first switch is located in the first switch display area after the user moves the position of the first switch.

The operation of modifying the first switch to the second position in the first switch display area may be understood as an operation of dragging the first switch, or may be an operation of moving the position of the first switch in another manner. This is not limited in this embodiment of this application.

S1303: After the first SIM card is removed from the electronic device, skip displaying the first switch in the first switch display area.

In this embodiment of this application, after the first SIM card is removed from the electronic device, a function corresponding to the first switch supported by the first SIM card cannot be used. In this case, the first switch may not be displayed in the first switch display area.

S1304: After the first SIM card is inserted into the electronic device again, the electronic device displays the first switch at the second position in the first switch display area.

In this embodiment of this application, for a process in which the electronic device displays the first switch at the second position in the first switch display area, refer to related descriptions in the foregoing embodiments corresponding to FIG. 11 and FIG. 12. Details are not described again.

After the first SIM card is inserted into the electronic device again, the function corresponding to the first switch supported by the first SIM card may be used. In this case, the first switch may be displayed in the first switch display area. The first switch is displayed at the second position in the first switch display area, so that the switch can be displayed based on modification of the user, thereby improving user experience.

Optionally, based on the embodiment corresponding to FIG. 13, after in response to the operation of modifying the first switch to the second position in the first switch display area, the method may further include: The first switch is saved at the second position in the first switch display area; and after the first SIM card is removed from the electronic device, the electronic device further saves the second position of the first switch in the first switch display area; and that the electronic device displays the first switch at the second position in the first switch display area includes: the electronic device displays the first switch at the second position in the first switch display area based on the second position saved in the electronic device.

In this embodiment of this application, the second position of the first switch in the first switch display area may be saved in the electronic device in any form, provided that the second position is also saved in the electronic device after the first SIM card is removed from the electronic device. For example, for a process of saving the second position of the first switch in the first switch display area, refer to related descriptions in the foregoing embodiment corresponding to FIG. 10. Details are not described again. For example, the second position of the first switch in the first switch display area may be saved in a vowifi_spec_position database.

For a process in which the electronic device displays the first switch at the second position in the first switch display area based on the second position saved in the electronic device, refer to related descriptions in the foregoing embodiments corresponding to FIG. 11 and FIG. 12. Details are not described again. For example, when the first switch is displayed in the first switch display area, the position, of the first switch, saved in the vowifi_spec_position database may be obtained.

In this way, the electronic device may obtain the second position, of the first switch, that is modified by the user, so that the first switch in the first switch display area can be displayed based on modification of the user, thereby improving user experience.

Optionally, based on the embodiment corresponding to FIG. 13, the displaying the first switch at the second position in the first switch display area may include: When there is no empty position between the second position and a position of a last switch in the first switch display area, the electronic device inserts the first switch into the second position in the first switch display area.

In this embodiment of this application, when obtaining the second position, of the first switch, modified by the user, it needs to be determined whether the first switch can be displayed at the second position in the first switch display area. For specific determining whether the first switch can be displayed at the second position in the first switch display area, refer to related descriptions of step S1206, step S1207, and step S1208 in the foregoing embodiments corresponding to FIG. 11 and FIG. 12. Details are not described again.

A scenario in which the electronic device inserts the first switch into the second position in the first switch display area corresponds to execution logic of step S1206 and step S1208. Details are not described again.

For example, if 16 shortcut switches have been displayed in the first switch display area, and the second position is the 1^{st} position in the first switch display area, that is, the second position is any position in the first switch display area from the 1^{st} position to the 16^{th} position. In this case, there is no empty position between the second position and the position of the last switch in the first switch display area, so that the electronic device may insert the first switch based on the second position. In this case, the shortcut switch after the second position needs to move one position backward.

It may be understood that the scenario is a scenario in which the first switch is displayed in the first switch display area based on the position, of the first switch, modified by the user. The electronic device inserts the first switch into the second position in the first switch display area, so that the first switch in the first switch display area can be displayed based on modification of the user, thereby improving user experience.

Optionally, based on the embodiment corresponding to FIG. 13, the method may further include: In response to an operation of modifying the first switch to a third position in the first switch display area, the electronic device displays the first switch at the third position in the first switch display area, where the third position and the second position are different; after the first SIM card is removed from the electronic device, the first switch is not displayed in the first switch display area; and after the first SIM card is inserted into the electronic device again, the electronic device displays the first switch at a fourth position in the first switch display area, where the fourth position is different from the third position, the fourth position is a position of a last switch in switches displayed in the first switch display area, and there is no empty position between the switches displayed in the first switch display area.

In this embodiment of this application, the third position may be understood as a position at which the first switch is located in the first switch display area after the user moves the position of the first switch. The fourth position may be understood as the position of the first switch in the first switch display area after the first SIM card is inserted again.

When obtaining the second position, of the first switch, modified by the user, it needs to be determined whether the first switch can be displayed at the third position in the first switch display area. For specific determining whether the first switch can be displayed at the third position in the first switch display area, refer to related descriptions of step S1206, step S1207, and step S1208 in the foregoing embodiments corresponding to FIG. 11 and FIG. 12. Details are not described again.

It may be understood that the scenario may correspond to a scenario in which the first switch is displayed behind another shortcut switch in the first switch display area based on the position, of the first switch, modified by the user. The scenario corresponds to execution logic of step S1206 and step S1207. Details are not described again.

For example, if 16 shortcut switches have been displayed in the first switch display area, and the third position is the 20^{th} position in the first switch display area, that is, there is still an empty position between the third position and a last shortcut switch in the first switch display area. In this case, the electronic device may display the first switch after the last shortcut switch in the first switch display area.

In this way, there is no empty position between shortcut switches displayed in the first switch display area, so that interface aesthetics is improved, thereby improving user experience.

Optionally, based on the embodiment corresponding to FIG. 13, after in response to the operation of modifying the first switch to the third position in the first switch display area, the method may further include: The first switch is saved at the third position in the first switch display area; and after the first SIM card is removed from the electronic device, the electronic device further saves the third position of the first switch in the first switch display area; and that the electronic device displays the first switch at a fourth position in the first switch display area includes: when there is an empty position between the third position and the position of the last switch in the switches displayed in the first switch display area, the electronic device displays the first switch at the fourth position in the first switch display area.

In this embodiment of this application, the third position of the first switch in the first switch display area may be saved in the electronic device in any form, provided that the third position is also saved in the electronic device after the first SIM card is removed from the electronic device. For example, for a process of saving the third position of the first switch in the first switch display area, refer to related descriptions in the foregoing embodiment corresponding to FIG. 10. Details are not described again. For example, the third position may be saved in a database.

For a process in which the electronic device displays the first switch in the first switch display area based on the third position saved in the electronic device, refer to related descriptions in the foregoing embodiments corresponding to FIG. 11 and FIG. 12. Details are not described again. For example, when the first switch is displayed in the first switch display area, the position, of the first switch, saved in the database may be obtained.

When there is still an empty position between the third position and the last shortcut switch in the first switch display area, the electronic device may display the first switch at the position of the last shortcut switch in the first switch display area, that is, display the first switch at the fourth position in the first switch display area.

In this way, the electronic device can implement display effect after the user modifies the position of the first switch, and interface aesthetics can also be improved, thereby improving user experience.

Optionally, based on the embodiment corresponding to FIG. 13, the first interface includes a first button, and the method may further include: In response to an operation of triggering the first button, the electronic device enters a second interface from the first interface, where the second interface includes a second switch display area, a third switch display area, and a second button, and the first switch is displayed in the second switch display area; in response to an operation of modifying the first switch to the third switch display area, the electronic device displays the first switch in the third switch display area; in response to an operation of triggering the second button, the electronic device enters the first interface from the second interface, where the first switch is not displayed in the first switch display area of the first interface; after the first SIM card is removed from the electronic device, the first switch is not displayed in the first switch display area, and the first switch is not displayed in the third switch display area; and after the first SIM card is inserted into the electronic device again, the first switch is not displayed in the first switch display area, and the electronic device displays the first switch in the third switch display area of the second interface.

In this embodiment of this application, the first button may be understood as the edit button 304 in the foregoing embodiment corresponding to FIG. 3.

The second interface may be understood as the edit shortcut switch interface 601 in the foregoing embodiment corresponding to FIG. 6. The second switch display area may be understood as the area 602 in the foregoing embodiment corresponding to FIG. 6. The third switch display area may be understood as the area 603 in the foregoing embodiment corresponding to FIG. 6. The second button may be understood as the done button 604 or the back button 606 in the foregoing embodiment corresponding to FIG. 6.

It may be understood that a switch in the second switch display area may be displayed in the first switch display area of the first interface, and a switch in the third switch display area may not be displayed in the first switch display area of the first interface.

It may be understood that the scenario may correspond to a scenario in which the user places the position of the first switch in the area 602 of the edit shortcut switch, and does not display the first switch in the control center interface. An identifier of the corresponding saved position of the first switch may be understood as -2 in the foregoing embodiment corresponding to FIG. 12. For specific determining whether the first switch is displayed in the first switch display area, refer to related descriptions of step S1203, step S1210, step S1211, and the like in the foregoing embodiments corresponding to FIG. 11 and FIG. 12. Details are not described again.

It may be understood that when the identifier of the saved position of the first switch is -2, it indicates that the user drags the first switch to the edit shortcut switch interface, and the first switch does not need to be displayed in the control center interface. In this case, an adding procedure of the first switch to the control center interface does not need to be performed. In this way, a position identifier of the first position is used, so that it can be determined that the first switch does not need to be displayed in the control center interface, and a modification operation of the user can be quickly determined, reducing an execution procedure of continuing to add the first switch in the control center interface.

Optionally, based on the embodiment corresponding to FIG. 13, the position identifier of the first switch is maintained in the electronic device; and when the first switch is located in the third switch display area, the position identifier of the first switch is recorded as a first identifier; after in response to the operation of triggering the second button, the method may further include: the position identifier of the first switch is saved as the first identifier; and that the first switch is not displayed in the first switch display area includes: the electronic device skips displaying the first switch in the first switch display area based on the first identifier.

In this embodiment of this application, the position identifier of the first switch may be understood as a position pos, of the first switch, obtained from the database in the foregoing embodiment corresponding to FIG. 12.

It may be understood that, in different scenarios, position identifiers of the first switch are different. For example, when the first switch is displayed in the first switch display area, the position identifier of the first switch is the position, of the first switch in the first switch display area, modified by the user. When the first switch is not displayed in the first switch display area, but is displayed in the third switch display area, the position identifier of the first switch is -2. When the first SIM card is not inserted into the electronic device or the first switch is not displayed in the electronic device, the position identifier of the first switch is -1. A specific value of the position identifier of the first switch is not limited in this embodiment of this application, provided that different scenarios for displaying the first switch can be distinguished.

The first identifier may be understood as a flag bit -2 in the foregoing embodiment corresponding to FIG. 12. When pos is the flag bit -2, it corresponds to a scenario in which the user moves the first switch to the edit shortcut switch interface, and does not display the first switch in the first switch display area. For a specific process of saving the position identifier of the first switch as the first identifier, refer to related descriptions of step S1004, step S1006, and the like in the foregoing embodiment corresponding to FIG. 10. Details are not described again.

For a scenario in which the first switch is not displayed in the first switch display area, identification may be performed by using a preset flag bit. In this way, a scenario in which the first switch is displayed at different positions can be quickly identified, a procedure of adding the first switch in the first switch display area is simplified, and the first switch is accurately displayed at the position based on the modification operation of the user.

Optionally, based on the embodiment corresponding to FIG. 13, a position identifier of the first switch is maintained in the electronic device; and when the first SIM card is not inserted into the electronic device or the first switch is not displayed in the electronic device, the position identifier of the first switch is recorded as a second identifier, an identifier of a default position of the first switch is preset in the electronic device, and the position identifier of the first switch is the second identifier before in response to the operation of modifying the first switch to the second position in the first switch display area; and that a first switch is displayed in a first interface of an electronic device when a first subscriber identity module SIM card is inserted into the electronic device may include: when the first subscriber identity module SIM card is inserted into the electronic device, the electronic device displays the first switch in the first interface based on the identifier of the default position.

In this embodiment of this application, the second identifier may be understood as a flag bit -1 in the foregoing embodiment corresponding to FIG. 12. When pos is the flag bit -1, it may correspond to a scenario in which the first switch has never been added to the electronic device, and the first switch is not displayed in the control center interface and the edit shortcut switch interface. The second identifier may also be understood as the identifier of the default position of the first switch in the database in which the operation of the user is saved.

When the first switch has never been added to the electronic device, the electronic device may display the first switch in the first switch display area by using the preset identifier of the default position of the first switch. The electronic device may preset the identifier of the default position of the first switch in a default list. For the default list, refer to related descriptions of the default list in the foregoing embodiment corresponding to FIG. 7. Details are not described again.

For the specific electronic device to display the first switch in the first interface based on the identifier of the default position, refer to related descriptions in the foregoing embodiment corresponding to FIG. 7. Details are not described again.

It may be understood that, for some users who frequently use the first switch, to improve user experience, the position of the first switch can be preset in the default list, so that the first switch is displayed at a fixed position in the first interface, thereby facilitating the user to find the first switch.

Optionally, based on the embodiment corresponding to FIG. 13, that the electronic device displays the first switch in the first interface based on the identifier of the default position may include: When there is no empty position between the default position and a position of a last switch in switches displayed in the first switch display area, the electronic device inserts the first switch into the default position in the first switch display area; or when there is an empty position between the default position and a position of a last switch in switches displayed in the first switch display area, the electronic device inserts the first switch into a next position of the position of the last switch in the first switch display area.

In this embodiment of this application, for a process in which the electronic device displays the first switch in the first interface based on the identifier of the default position, refer to related descriptions in the foregoing embodiment corresponding to FIG. 7. Details are not described again.

The electronic device presets the position of the first switch in the default list, so that the user can easily find the position of the first switch in the first interface, thereby improving user experience.

Optionally, based on the embodiment corresponding to FIG. 13, the electronic device maintains the position identifier of the first switch in a database, the position identifier of the first switch in the database is updated when a position of a switch in the first switch display area is changed, and the database is different from a database configured to save an identifier of the switch and the position of the switch in the first switch display area.

In this embodiment of this application, the modification operation of the user is saved in the database, so that when the SIM card is removed from the electronic device, the modification operation of the user is not deleted, and may still be saved in the database. In this way, when the SIM card is inserted into the electronic device next time, the modification operation of the user can be obtained from the database, and the first switch can be displayed based on modification of the user.

Optionally, based on the embodiment corresponding to FIG. 13, before in response to the operation of modifying the first switch to the second position in the first switch display area, a second SIM card is further inserted into the electronic device, the electronic device further displays a second switch in the first switch display area, the second switch is located at a fifth position in the first switch display area, and the fifth position and the first position are different; and after in response to the operation of modifying the first switch to the second position in the first switch display area, the method may further include: the second switch is saved at the fifth position in the first switch display area; after the second SIM card is removed from the electronic device, the electronic device further saves the fifth position of the second switch in the first switch display area; and after the second SIM card is inserted into the electronic device again, the electronic device displays the second switch in the first switch display area based on the fifth position.

In this embodiment of this application, the fifth position may be understood as a position at which the second switch corresponding to the second SIM card is displayed in the first switch display area when two SIM cards are inserted into the electronic device.

It may be understood that the scenario is a scenario in which the two SIM cards are inserted into the electronic device. A process of saving the position of the second switch in the first switch display area, displaying the second switch, and the like is similar to a related procedure of the first SIM card. Details are not described again.

It may be understood that this embodiment of this application may also be applied to a scenario of a plurality of SIM cards. In this way, the electronic device can save a position of each SIM card displayed in the first switch display area, and can accurately display a position of each switch in the first switch display area after the user modifies a specific switch.

Optionally, based on the embodiment corresponding to FIG. 13, in the first switch display area, a position of the first switch is located before a position of the second switch, and before that the electronic device displays the first switch at the second position in the first switch display area, the method may further include: The second switch is moved forward one position in the first switch display area; and that the electronic device displays the second switch in the first switch display area includes: the electronic device displays the second switch after the position is moved in the first switch display area.

In this embodiment of this application, the scenario may be the related scenario in step S1205 in the foregoing embodiment corresponding to FIG. 12. Details are not described again. It may be understood that if the position of the second switch in the first switch display area is moved forward one position, the switch before the position is moved backward one position.

In this scenario, the second switch is moved forward one position in the first switch display area, so that the second switch can be displayed at a correct position in the control center interface, thereby matching the modified position of the user.

Optionally, based on the embodiment corresponding to FIG. 13, the fifth position of the second switch and the second position of the first switch are saved in different databases.

In this embodiment of this application, the fifth position of the second switch and the second position of the first switch are saved in different databases. In this way, a position of each switch can be easily maintained, thereby reducing a possibility of confusion between positions of two switches, and improving code robustness.

Optionally, based on the embodiment corresponding to FIG. 13, after the first subscriber identity module SIM card is inserted into the electronic device, the method may further include: When a broadcast used to indicate a state change of the first SIM card is obtained, a configuration item of the first SIM card and a state of the first SIM card are determined; and when the configuration item of the first SIM card is a first preset value and the state of the first SIM card is a first preset state, whether the first SIM card supports a preset function is determined, where the configuration item being the first preset value is used to indicate that a shortcut switch of the first SIM card is displayed in the first switch display area, and the state of the first SIM card being the first preset state is used to indicate that the first SIM card is in position; and that a first switch is displayed in a first interface of an electronic device may include: when the first SIM card supports the preset function, the first switch is displayed in the first interface of the electronic device.

In this embodiment of this application, for the obtained broadcast used to indicate the state change of the first SIM card, refer to related descriptions of step S701 in the embodiment corresponding to FIG. 7. Details are not described again. For determining the configuration item of the first SIM card and the state of the first SIM card, refer to related descriptions of step S702 in the foregoing embodiment corresponding to FIG. 7. Details are not described again. For determining whether the first SIM card supports the preset function, refer to related descriptions of step S703 in the foregoing embodiment corresponding to FIG. 7. Details are not described again.

Specifically, when the first SIM card supports the preset function, for a process in which the first switch is displayed in the first interface of the electronic device, refer to related descriptions of step S704 and step S708 in the embodiment corresponding to FIG. 7. Details are not described again.

The preset function may be a function supported by the SIM card, and the function may display the related switch in the control center interface. For example, the preset function may include the vowifi function in the foregoing embodiment, and may further include a mobile data function. This is not limited in this embodiment of this application.

The configuration item of the first SIM card, the state of the first SIM card, the state of the first SIM card, the preset function supported by the first SIM card, or the like is determined, so that it may be determined that the first SIM card is in position and may be normally used, and the preset function provided by the first SIM card may be displayed in the control center interface. In this way, a probability that a display error occurs when the switch is displayed in the control center interface can be reduced.

Optionally, based on the embodiment corresponding to FIG. 13, the preset function includes: a wireless fidelity Wi-Fi calling vowifi function of the first SIM card.

In this embodiment of this application, the vowifi function is displayed in the control center interface, so that the user can easily enable or disable the vowifi function, to improve user experience.

Optionally, based on the embodiment corresponding to FIG. 13, after the first SIM card is removed from the electronic device, the method may further include: When a broadcast used to indicate a state change of the first SIM card is obtained, a state of the first SIM card is determined; and that the first switch is not displayed in the first switch display area may include: when the state of the first SIM card is a second preset state, the first switch is not displayed in the first switch display area, where the state of the first SIM card being the second preset state is used to indicate that the first SIM card is not in position.

In this embodiment of this application, for the obtained broadcast used to indicate the state change of the first SIM card, refer to related descriptions of step S801 in the embodiment corresponding to FIG. 8. Details are not described again. For the related process of removing the first SIM card from the electronic device, refer to related descriptions in the foregoing embodiment corresponding to FIG. 8. Details are not described again.

After the first SIM card is removed from the electronic device, logic of removing the first switch is executed, and the display position of the switch in the control center interface may be updated in time, thereby providing, for the user, a shortcut function that can be normally used.

Optionally, based on the embodiment corresponding to FIG. 13, the first interface includes a first button, and the method may further include: In response to an operation of triggering the first button, the electronic device enters a second interface from the first interface, where the second interface includes a second switch display area, a third switch display area, and a second button, and a first icon of a first application is displayed in the third switch display area; in response to an operation of modifying the first icon to a sixth position in the second switch display area, the electronic device displays the first icon at the sixth position in the second switch display area; in response to an operation of triggering the second button, the electronic device enters the first interface from the second interface, where the first icon is displayed at the sixth position in the first switch display area of the first interface; after the first application is uninstalled in the electronic device, the first icon is not displayed in the first switch display area; and after the first application is installed in the electronic device again, the electronic device displays the first icon at a seventh position in the first switch display area, where the seventh position and the sixth position are the same or different.

In this embodiment of this application, for the first button, the second interface, the second switch display area, the third switch display area, the second button, and the like, refer to related descriptions in the foregoing embodiment. Details are not described again.

The first application may be any uninstallable application in the electronic device, and the application may be an application that displays a shortcut icon of the application in the third switch display area. The specific first application is not limited in this embodiment of this application. The first icon may be understood as displaying a shortcut icon of the first application in the third switch display area.

The scenario may correspond to moving the shortcut icon of the first application from the third switch display area to the second switch display area, and displaying a scene of the shortcut icon in the first switch display area.

The sixth position may be understood as a display position of the shortcut icon in the first switch display area after the user moves the shortcut icon from the third switch display area to the second switch display area.

The seventh position may be understood as a display position of the shortcut icon in the first switch display area after the electronic device installs the first application again.

The interface display method in this embodiment of this application is applicable to a scenario in which the shortcut icon of the application is displayed. In this way, the user can not only move a position of the shortcut switch displayed with a card, but also move a shortcut icon of the application. This increases flexibility of displaying the switch in the control center, so that user experience can be improved.

Optionally, based on the embodiment corresponding to FIG. 13, that the electronic device displays the first icon at a seventh position in the first switch display area may include: When there is no empty position between the sixth position and a position of a last switch in switches displayed in the first switch display area, the electronic device inserts the first icon into the seventh position in the first switch display area, where the seventh position and the sixth position are the same; or when there is an empty position between the sixth position and a position of a last switch in switches displayed in the first switch display area, the electronic device inserts the first switch into the seventh position in the first switch display area, where the seventh position is a next position of the position of the last switch, and the seventh position and the sixth position are different.

In this embodiment of this application, a process in which the electronic device displays the first icon at the seventh position of the first switch display area is similar to a process in which the electronic device displays the first switch in the first interface based on the identifier of the default position. Details are not described again.

When displaying the first icon, the electronic device may further consider display effect implemented in the interface while considering the sixth position modified by the user. In this way, that the position of the first icon is modified by the user can be met, and interface aesthetics can also be improved, thereby improving user experience.

Optionally, based on the embodiment corresponding to FIG. 13, after in response to the operation of triggering the second button, the method may further include: The sixth position of the first icon is saved in the first switch display area; and after the first application is uninstalled in the electronic device, the electronic device further saves the sixth position of the first icon in the first switch display area; and that the electronic device displays the first icon at a seventh position in the first switch display area may include: the electronic device displays the first switch at the seventh position in the first switch display area based on the sixth position saved in the electronic device.

In this embodiment of this application, the sixth position of the first icon in the first switch display area may be saved in the electronic device in any form, provided that the sixth position is saved in the electronic device after the first application is uninstalled in the electronic device. For example, the process of saving the first icon at the sixth position in the first switch display area is similar to the process of saving the first switch at the second position in the first switch display area. Details are not described again.

In this way, the electronic device may obtain the sixth position, of the first icon, that is modified by the user, so that the first icon in the first switch display area can be displayed based on modification of the user, thereby improving user experience.

It should be noted that user information (including but not limited to user equipment information, user personal information, and the like) and data (including but not limited to data used for analysis, stored data, displayed data, and the like) in the embodiments of this application are all information and data that are authorized by the user or that are fully authorized by each party. In addition, collection, use, and processing of the related data need to comply with relevant laws, regulations, and standards of related countries and regions, and a corresponding operation entry is provided for the user to choose to authorize or reject.

The solutions provided in the embodiments of this application are mainly described above from a method perspective. To implement the foregoing functions, corresponding hardware structures and/or software modules are included for performing the functions. A person skilled in the art should be easily aware that the method steps in the examples described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In the embodiments of this application, an apparatus for implementing the method may be divided into functional modules based on the foregoing method examples, for example, each functional module may be obtained through division for each corresponding function, or two or more functions may be integrated into one processing module. The integrated module may be implemented in a form of hardware, or may be implemented in a form of a software functional module. It should be noted that, in the embodiments of this application, division into the modules is an example, and is merely logical function division. During actual implementation, another division manner may be used.

FIG. 14 is a schematic diagram of a structure of a chip according to an embodiment of this application. A chip 1400 includes one or more than two (including two) processors 1401, a communication line 1402, a communication interface 1403, and a memory 1404.

In some implementations, the memory 1404 stores the following elements: an executable module or a data structure, or a subset thereof, or an extended set thereof.

The foregoing method described in the embodiments of this application may be applied to the processor 1401 or implemented by the processor 1401. The processor 1401 may be an integrated circuit chip, and has a signal processing capability. In an implementation process, each step in the foregoing method may be completed through an integrated logical circuit of hardware in the processor 1401 or instructions in a form of software. The processor 1401 may be a general-purpose processor (for example, a microprocessor or a conventional processor), a digital signal processor (digital signal processing, DSP), an application specific integrated circuit (application specific integrated circuit, ASIC), a field-programmable gate array (field-programmable gate array, FPGA) or another programmable logic device, a discrete gate, a transistor logic device, or a discrete hardware component. The processor 1401 may implement or perform the processing-related methods, steps, and logical block diagrams disclosed in the embodiments of this application.

The steps of the method disclosed with reference to the embodiments of this application may be directly performed and completed by a hardware decoding processor, or may be performed and completed by a combination of hardware and software modules in the decoding processor. The software module may be located in a mature storage medium in the art, such as a random access memory, a read-only memory, a programmable read-only memory, or an electrically erasable programmable read-only memory (electrically erasable programmable read-only memory, EEPROM). The storage medium is located in the memory 1404. The processor 1401 reads information in the memory 1404, and completes steps of the foregoing method in combination with hardware of the processor.

The processor 1401, the memory 1404, and the communication interface 1403 may communicate with each other through the communication line 1402.

In the foregoing embodiments, the instructions executed by the processor and stored in the memory may be implemented in the form of a computer program product. The computer program product may be pre-written in the memory, or may be downloaded and installed in the memory in the form of software.

An embodiment of this application further provides a computer program product, including one or more computer instructions. When the computer program instructions are loaded and executed on a computer, all or some of procedures or functions according to the embodiments of this application are generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device including a server, a data center, or the like that integrates one or more usable media. For example, the usable medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a computer-readable storage medium. All or some of the methods described in the foregoing embodiments may be implemented by software, hardware, firmware, or any combination thereof. The computer-readable medium may include a computer storage medium and a communication medium, and may further include any medium that can transfer a computer program from one place to another place. The storage medium may be any target medium that can be accessed by a computer.

In a possible design, the computer-readable medium may include a compact disc read-only memory (compact disc read-only memory, CD-ROM), a RAM, a ROM, an EEPROM, or another optical disc memory. The computer-readable medium may include a magnetic disk memory or another magnetic disk storage device. In addition, any connection line may also be appropriately referred to as a computer-readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared, radio, and microwave are included in the definition of the medium. Magnetic disks and optical discs used in this specification include a compact disc (CD), a laser disc, an optical disc, a digital versatile disc (digital versatile disc, DVD), a floppy disk, and a Blu-ray disc. The magnetic disks usually magnetically reproduce data, and the optical discs optically reproduce data by using laser light.

The embodiments of this application are described with reference to flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of any other programmable data processing device to generate a machine, so that the instructions executed by the computer or the processing unit of any other programmable data processing device generate an apparatus for implementing a specific function in one or more procedures in the flowcharts and/or in one or more blocks in the block diagrams.

## Claims

1. An interface display method, wherein the method comprises:
displaying a first switch in a first interface of an electronic device when a first SIM card is inserted into the electronic device, wherein the first switch is located at a first position in a first switch display area of the first interface;
in response to an operation of modifying the first switch to a second position in the first switch display area, displaying, by the electronic device, the first switch at the second position in the first switch display area, wherein the first position and the second position are different;
after the first SIM card is removed from the electronic device, skipping displaying the first switch in the first switch display area; and
after the first SIM card is inserted into the electronic device again, displaying, by the electronic device, the first switch at the second position in the first switch display area.

2. The method according to claim 1, wherein after in response to the operation of modifying the first switch to the second position in the first switch display area, the method further comprises:
saving the first switch at the second position in the first switch display area; and
after the first SIM card is removed from the electronic device, further saving, by the electronic device, the second position of the first switch in the first switch display area; and
the displaying, by the electronic device, the first switch at the second position in the first switch display area comprises:
displaying, by the electronic device, the first switch at the second position in the first switch display area based on the second position saved in the electronic device.

3. The method according to claim 2, wherein the displaying the first switch at the second position in the first switch display area comprises:
when there is no empty position between the second position and a position of a last switch in the first switch display area, inserting, by the electronic device, the first switch into the second position in the first switch display area.

4. The method according to any one of claims 1 to 3, wherein the method further comprises:
in response to an operation of modifying the first switch to a third position in the first switch display area, displaying, by the electronic device, the first switch at the third position in the first switch display area, wherein the third position and the second position are different;
after the first SIM card is removed from the electronic device, skipping displaying the first switch in the first switch display area; and
after the first SIM card is inserted into the electronic device again, displaying, by the electronic device, the first switch at a fourth position in the first switch display area, wherein the fourth position is different from the third position, the fourth position is a position of a last switch in switches displayed in the first switch display area, and there is no empty position between the switches displayed in the first switch display area.

5. The method according to claim 4, wherein after in response to the operation of modifying the first switch to the third position in the first switch display area, the method further comprises:
saving the first switch at the third position in the first switch display area; and
after the first SIM card is removed from the electronic device, further saving, by the electronic device, the third position of the first switch in the first switch display area; and
the displaying, by the electronic device, the first switch at a fourth position in the first switch display area comprises:
when there is an empty position between the third position and the position of the last switch in the switches displayed in the first switch display area, displaying, by the electronic device, the first switch at the fourth position in the first switch display area.

6. The method according to any one of claims 1 to 3, wherein the first interface comprises a first button, and the method further comprises:
in response to an operation of triggering the first button, entering, by the electronic device, a second interface from the first interface, wherein the second interface comprises a second switch display area, a third switch display area, and a second button, and the first switch is displayed in the second switch display area;
in response to an operation of modifying the first switch to the third switch display area, displaying, by the electronic device, the first switch in the third switch display area;
in response to an operation of triggering the second button, entering, by the electronic device, the first interface from the second interface, wherein the first switch is not displayed in the first switch display area of the first interface;
after the first SIM card is removed from the electronic device, skipping displaying the first switch in the first switch display area, and skipping displaying the first switch in the third switch display area; and
after the first SIM card is inserted into the electronic device again, skipping displaying the first switch in the first switch display area, and displaying, by the electronic device, the first switch in the third switch display area of the second interface.

7. The method according to claim 6, wherein a position identifier of the first switch is maintained in the electronic device; and when the first switch is located in the third switch display area, the position identifier of the first switch is recorded as a first identifier;
after in response to the operation of triggering the second button, the method further comprises:
saving the position identifier of the first switch as the first identifier; and
the skipping displaying the first switch in the first switch display area comprises:
skipping, by the electronic device, displaying the first switch in the first switch display area based on the first identifier.

8. The method according to any one of claims 1 to 3, wherein a position identifier of the first switch is maintained in the electronic device; and when the first SIM card is not inserted into the electronic device or the first switch is not displayed in the electronic device, the position identifier of the first switch is recorded as a second identifier, an identifier of a default position of the first switch is preset in the electronic device, and the position identifier of the first switch is the second identifier before in response to the operation of modifying the first switch to the second position in the first switch display area; and
the displaying a first switch in a first interface of an electronic device when a first subscriber identity module SIM card is inserted into the electronic device comprises:
when the first subscriber identity module SIM card is inserted into the electronic device, displaying, by the electronic device, the first switch in the first interface based on the identifier of the default position.

9. The method according to claim 8, wherein the displaying, by the electronic device, the first switch in the first interface based on the identifier of the default position comprises:
when there is no empty position between the default position and a position of a last switch in switches displayed in the first switch display area, inserting, by the electronic device, the first switch into the default position in the first switch display area; or
when there is an empty position between the default position and a position of a last switch in switches displayed in the first switch display area, inserting, by the electronic device, the first switch into a next position of the position of the last switch in the first switch display area.

10. The method according to claim 8, wherein the electronic device maintains the position identifier of the first switch in a database, the position identifier of the first switch in the database is updated when a position of a switch in the first switch display area is changed, and the database is different from a database configured to save an identifier of the switch and the position of the switch in the first switch display area.

11. The method according to any one of claims 1 to 3, wherein before in response to the operation of modifying the first switch to the second position in the first switch display area, a second SIM card is further inserted into the electronic device, the electronic device further displays a second switch in the first switch display area, the second switch is located at a fifth position in the first switch display area, and the fifth position and the first position are different; and
after in response to the operation of modifying the first switch to the second position in the first switch display area, the method further comprises:
saving the second switch at the fifth position in the first switch display area;
after the second SIM card is removed from the electronic device, further saving, by the electronic device, the fifth position of the second switch in the first switch display area; and
after the second SIM card is inserted into the electronic device again, displaying, by the electronic device, the second switch in the first switch display area based on the fifth position.

12. The method according to claim 11, wherein in the first switch display area, a position of the first switch is located before a position of the second switch, and before the displaying, by the electronic device, the first switch at the second position in the first switch display area, the method further comprises:
moving the second switch forward one position in the first switch display area; and
the displaying, by the electronic device, the second switch in the first switch display area comprises:
displaying, by the electronic device, the second switch after the position is moved in the first switch display area.

13. The method according to claim 11, wherein the fifth position of the second switch and the second position of the first switch are saved in different databases.

14. The method according to any one of claims 1 to 3, wherein after the first subscriber identity module SIM card is inserted into the electronic device, the method further comprises:
when a broadcast used to indicate a state change of the first SIM card is obtained, determining a configuration item of the first SIM card and a state of the first SIM card; and
when the configuration item of the first SIM card is a first preset value and the state of the first SIM card is a first preset state, determining whether the first SIM card supports a preset function, wherein the configuration item being the first preset value is used to indicate that a shortcut switch of the first SIM card is displayed in the first switch display area, and the state of the first SIM card being the first preset state is used to indicate that the first SIM card is in position; and
the displaying a first switch in a first interface of an electronic device comprises:
when the first SIM card supports the preset function, displaying the first switch in the first interface of the electronic device.

15. The method according to claim 14, wherein the preset function comprises: a wireless fidelity Wi-Fi calling vowifi function of the first SIM card.

16. The method according to any one of claims 1 to 3, wherein after the first SIM card is removed from the electronic device, the method further comprises:
when a broadcast used to indicate a state change of the first SIM card is obtained, determining a state of the first SIM card; and
the skipping displaying the first switch in the first switch display area comprises:
when the state of the first SIM card is a second preset state, skipping displaying the first switch in the first switch display area, wherein the state of the first SIM card being the second preset state is used to indicate that the first SIM card is not in position.

17. The method according to any one of claims 1 to 3, wherein the first interface comprises a first button, and the method further comprises:
in response to an operation of triggering the first button, entering, by the electronic device, a second interface from the first interface, wherein the second interface comprises a second switch display area, a third switch display area, and a second button, and a first icon of a first application is displayed in the third switch display area;
in response to an operation of modifying the first icon to a sixth position in the second switch display area, displaying, by the electronic device, the first icon at the sixth position in the second switch display area;
in response to an operation of triggering the second button, entering, by the electronic device, the first interface from the second interface, wherein the first icon is displayed at the sixth position in the first switch display area of the first interface;
after the first application is uninstalled in the electronic device, skipping displaying the first icon in the first switch display area; and
after the first application is installed in the electronic device again, displaying, by the electronic device, the first icon at a seventh position in the first switch display area, wherein the seventh position and the sixth position are the same or different.

18. The method according to claim 17, wherein the displaying, by the electronic device, the first icon at a seventh position in the first switch display area comprises:
when there is no empty position between the sixth position and a position of a last switch in switches displayed in the first switch display area, inserting, by the electronic device, the first icon into the seventh position in the first switch display area, wherein the seventh position and the sixth position are the same; or
when there is an empty position between the sixth position and a position of a last switch in switches displayed in the first switch display area, inserting, by the electronic device, the first switch into the seventh position in the first switch display area, wherein the seventh position is a next position of the position of the last switch, and the seventh position and the sixth position are different.

19. The method according to claim 17, wherein after in response to the operation of triggering the second button, the method further comprises:
saving the sixth position of the first icon in the first switch display area; and
after the first application is uninstalled in the electronic device, further saving, by the electronic device, the sixth position of the first icon in the first switch display area; and
the displaying, by the electronic device, the first icon at a seventh position in the first switch display area comprises:
displaying, by the electronic device, the first switch at the seventh position in the first switch display area based on the sixth position saved in the electronic device.

20. An electronic device, comprising a memory and a processor, wherein the memory is configured to store a computer program, and the processor is configured to execute the computer program, to perform the method according to any one of claims 1 to 19.

21. A computer-readable storage medium, wherein the computer-readable storage medium stores instructions; and when the instructions are executed, a computer is enabled to perform the method according to any one of claims 1 to 19.
